# EUROPEAN PATENT SPECIFICATION

(11) **EP 2 269 828 B1**
(45) Date of publication and mention of the grant of the patent: **12.12.2012**
(21) Application number: 10177564.1
(22) Date of filing: 13.03.2007
(51) Int. Cl.: B41J 2/44, B41J 2/47, B41J 2/475, B41M 5/26, B41M 5/36

(54) **Image processing method and image processing apparatus**
Bildverarbeitungsverfahren und Bildverarbeitungsvorrichtung
Appareil et procédé de traitement d'images

(30) Priority: 14.03.2006 JP 2006069767; 09.02.2007 JP 2007030637
(43) Date of publication of application: 05.01.2011
(62) Divisional of application: 07104062.0
(73) Proprietor: Ricoh Company, Ltd., Tokyo 143-8555 (JP)
(72) Inventor: Kawahara, Shinya, Tokyo 143-8555 (JP); Ishimi, Tomomi, Tokyo 143-8555 (JP); Hotta, Yoshihiko, Tokyo 143-8555 (JP)
(74) Representative: Barz, Peter

(56) References cited:
- JP-A- 8 267 797
- JP-A- 2003 127 446

## Description

### BACKGROUND OF THE INVENTION

### Field of the Invention

The present invention relates to an image processing method capable of increasing cycle durability and erasability and of reducing image-erasing time.

### Description of the Related Art

A non-contacting laser based method is proposed as a method of creation or deletion of an image on or from a thermoreversible recording medium (hereinafter referred to as "reversible thermal sensitive medium," "recording medium," or "medium" in some cases) whose surface has irregularities and as a method of creation or deletion of' an image on such a medium at a distance (see Japanese Patent Application Laid-Open (JP-A) No. 2000-136022). This method adopts non-contacting recording on shipping containers used for distribution of goods, wherein the containers are formed of' a thermoreversible recording medium, a laser is used for recording (writing) of image, and hot blast, heated water, infrared heaters, or the like are used to erase the image

There are various proposed methods that involve laser irradiation for recording/erasing of' image on/from such thermoreversible recording media (see for instance JP-A No. 07-186555 (Japanese Patent (JP-B) No. 3350836), JP-A No. 07-186445 (JP-B No. 3446316), JP-A No. 2002-347272, and JP-A No. 2004-195751).

The technique disclosed in JP-A No. 07-186555 (JP-B No. 3350836) is an improved method for image formation and erasing that involves formation or erasing of image on or from a thermoreversible recording medium by utilizing heat generated by irradiation of' a photothermal conversion sheet placed on the medium with a laser beam. The Specification of the Patent Literature discloses that formation and erasing of image is possible by controlling the condition for laser beam irradiation. More specifically, it is stated that it is possible to control a heating temperature to a first specified temperature and a second specified temperature for the thermoreversible recording medium by controlling at least one of' light irradiation time, light intensity, degree of focusing and light intensity distribution, and that it is possible to form or erase an image or partially entirely by changing the cooling rate after heating.

JP-A No. 07-186445 (JP-B No. 3446316) discloses a method that uses two laser beams: one as an oval or oblong laser spot for image erasing, and one as a circular laser spot for image formation, a method for recording using a composite beam of'two lasers, and a method for recording using a composite beam of two transformed lasers. Two laser-recording can realize high-density image formation compared to one laser-recording.

The technique disclosed in JP-A No. 2002-347272 is directed to utilize during image recording or erasing both sides of a mirror to change the shape of' the focused laser beam spot according to the differences in optical paths and/or mirror shape, whereby it is possible to change the size of a beam spot or to make the beam out of focus with a simple optical system.

Furthermore, JP-A No. 2004-195751 discloses that almost all the ghost images remained after image erasing can be removed by setting the laser absorbance of' a label-shaped reversible thermosensitive recording medium to 50% or more, irradiation energy during printing to 5.0mJ/mm² to 15.0mJ/mm², a product of laser absorbance and irradiation energy for print to 3.0mJ/mm² to 14.0 mJ/mm² and a product of' laser absorbance upon erasing and irradiation energy for print to 11 folds to 3.0 folds.

In addition, a method of erasing of an image using a laser beam is proposed (see JP-A No 2003-246144), wherein recording of a clear-contrast image of high durability is said be realized on reversible thermosensitive recording media by erasing previous one at levels (laser beam energy, laser irradiation time, scanning speed and pulse width) that are 25% to 65% of' those for laser recording.

Although laser printing and laser erasing can be performed by the methods described above, there remains a problem of occurrence of local heat damages when lines are overlapped during printing and a problem of reduced color developing density in filled-in areas, because laser control is not performed during printing.

Methods of controlling printing energy are disclosed in order to solve the problems described above (see JP-A Nos. 2003-127446 which discloses a method according to the preamble of claim 1 and 2004-345273).

It is described in JP-A No. 2003-127446 that degradation of reversible thermosensitive recording media is prevented by reducing local heat damages in the following manners: the laser power is controlled for each image dot to thereby reduce the laser power for areas where image dots are to be overlapped and where the laser is turned back, and reduce energy at specified intervals for linear printing.

Moreover, it is described in JP-A No. 2004-345273 that irradiation energy is reduced during laser imaging by multiplying it by a value [cos0.5R| k (where 0.3<k<4 and R is an angle at which the laser beam turn) according to angle R, and that this prevents addition of excessive energy to the overlapped portions of' linear laser beam lines during laser recording to thereby reduce degradation of media or maintain contrast without entailing too much energy reduction.

In image processing methods that involve laser beams for image recording and image erasing, for example, raster scanning and vector scanning are used for controlling laser scanning.

Raster scanning is a laser scanning controlling system that is typically used for CRT images as seen in TV sets, wherein a laser beam linearly sweeps in X direction from a certain start point to a certain end point, the position of' the next start point is advanced in Y direction, the laser beam linearly sweeps in a similar way, and this sequence is repeated; on the other hand, vector scanning is a laser scanning controlling system wherein a laser beam sweeps linearly or curvilinearly in such a way that an image is scanned along its outline (see JP-A No. 08-267797).

As a general technique in raster scanning, a method is disclosed wherein a laser source is moved step-by-step in X direction until it reaches a position where it should be turned on to start rendering of an image, and after scanning the first line, the position of the scan line is advanced in Y direction, and the next line is similarly scanned (see JP-A No. 2001-88333).

In addition, raster scanning wherein X-direction movement and Y-direction movement are interchanged is also used (see JP-A Nos. 2002-347272 and 2002-113889).

Even in vector scanning, raster scanning is utilized wherein an image is rendered in bitmap format by sweeping a laser beam laterally, and column scanning is used wherein an image is rendered by sweeping a laser beam vertically (see JP-A No. 2003-127446).

However, when vector scanning is used that eliminates a printed pattern by sweeping a laser beam along the printed pattern upon laser scanning, it is necessary to prepare an image-erasing pattern for each printed pattern. Moreover, when displacement occurs, it results in an occasion where some portions of the image are not erased. Displacement is likely to occur particularly in cases where an image is printed or erased on or from an moving article, which may result in erasing failure.

Thus, there are methods for eliminating the entire printed area without causing any displacement; however, methods that adopt raster scanning are the most general methods (see JP-A No. 2001-88333).

However, the image erasing method disclosed in JP-A No. 2001-88333 leads to degradation of media and reduction in the cycle durability. This is caused by heat that is generated by excessive laser irradiation and that is accumulated in an area where laser irradiation that has finished writing the first line wraps-around to the next scanning point by moving backing in Y direction by one step (hereinafter "turn back area" in some cases).

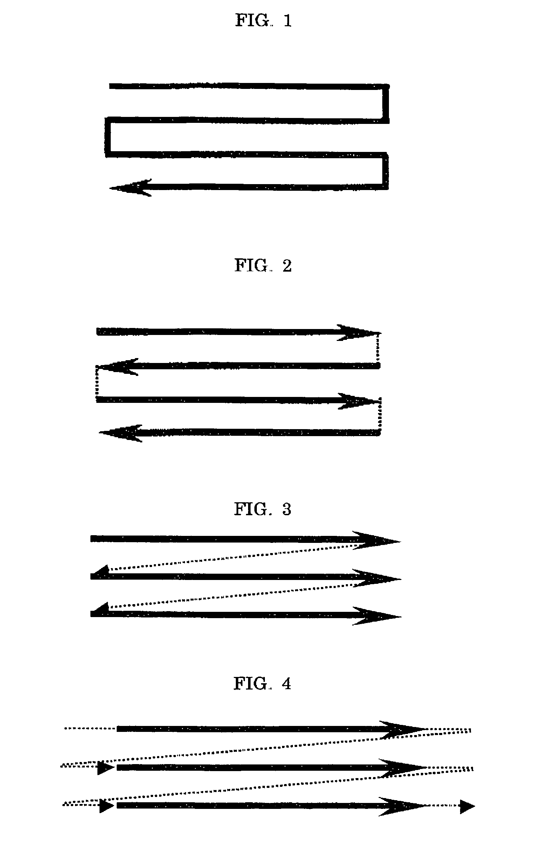

Laser scanning is controlled by movement of a galvanometer mirror or stage mounted to a laser source-equipped image recording apparatus. In either case, it is very difficult to immediately stop a laser beam in turn back areas; thus, the scan speed is gradually slowed down there. For this reason, in conventional scanning strategies, the laser beam slows down in the turn back areas, so too does the scan speed, thereby imparting excessive energy to the turn back areas and promoting them to a high-energy state. In addition, since the laser beam is immediately applied to the nearby portion, i.e., the start point of the next laser scanning (line) without stopping laser irradiation, extremely excessive energy is imparted to the turn back area. In this way media degradation promotes and the cycle durability is reduced (e.g., see FIG. 1).

When laser irradiation is stopped in the turn back area with a conventional scanning strategy, the amount of energy imparted to the thermoreversible recoding medium is small as compared to a case where laser irradiation is not stopped. However, laser irradiation starts at the start point of the next line (i.e., nearby portion) before the turn back area is cooled down. For this reason, it still results in application of excessive energy to the turn back area, promoting media degradation and reducing cycle durability (e.g., see FIG. 2).

The turn back areas of' the thermoreversible recording medium, high-temperature areas due to application of excessive energy, may be susceptible to generation of background fogs due to color developemnt. In order to completely erase an image without entailing the generation of background fogs, the turn back area needs to be almost cooled down before laser scanning proceeds to the next line. Thus it takes much time to erase an image, depending on the size of the image.

### BRIEF SUMMARY OF THE INVENTION

An object of the present invention is to provide an image processing method according to claim 1 capable of increasing cycle durability and erasability and of reducing image-erasing time.

### BRIEF DESCRIPTION OF THE SEVERAL VIEWS OF THE DRAWINGS

FIG.. 1 shows a conventional laser scanning mode.
FIG. 2 shows another conventional laser scanning mode.
FIG. 3 shows a laser scanning mode as a reference.
FIG. 4 shows another laser scanning mode as a reference.
FIG. 5 shows still another laser scanning mode as a reference.
FIG. 6 shows a laser scanning mode of the present invention.
FIG. 7 shows a further laser scanning mode of the present invention.
FIG. 8 shows a still further laser scanning mode as a reference.
FIG. 9 shows a yet further laser scanning mode as a reference.
FIG. 10A is a schematic explanatory diagram showing an example of light intensities of "central region" and "peripheral regions" in the light intensity distribution in the beam cross section of a laser beam used in the image processing method of the present invention, the cross section cut along a direction orthogonal to the traveling direction of the beam.
FIG. 10B is a schematic explanatory diagram showing another example of light intensities of "central region" and "peripheral regions" in the light intensity distribution in the beam cross section of a laser beam used in the image processing method of the present invention, the cross section cut along a direction orthogonal to the traveling direction of the beam.
FIG. 10C is a schematic explanatory diagram showing a still another example of light intensities of "central region" and "peripheral regions" in the light intensity distribution in the beam cross section of a laser beam which is used in the image processing method of the present invention, the cross section cut along a direction orthogonal to the traveling direction of the beam.
FIG. 10D is a schematic explanatory diagram showing a yet another example of light intensities of" central region" and "peripheral regions" in the light intensity distribution in the beam cross section of a laser beam used in the image processing method of the present invention, the cross section cut along a direction orthogonal to the traveling direction of the beam.
FIG. 10E is a schematic diagram showing an example of light intensities of "central region" and "peripheral regions" in the light intensity distribution (Gaussian distribution) in the beam cross section of a general laser beam used in the image processing method of the present invention, the cross section cut along a direction orthogonal to the traveling direction of the beam.
FIG. 11A is a schematic explanatory diagram showing an example of a light intensity adjusting unit in the image processing apparatus of the present invention.
FIG. 11B is a schematic explanatory diagram showing another example of a light intensity adjusting unit in the image processing apparatus of the present invention
FIG. 12 shows an example of the image processing apparatus used in the present invention.
FIG. 13A is a graph showing clear-clouded characteristics of a thermoreversible recording medium.
FIG. 13B is a schematic explanatory diagram showing the mechanism by which a thermoreversible recording medium changes between clear state and clouded state.
FIG. 14A is a graph showing color development-decolorization characteristics of' a thermoreversible recording medium..
FIG. 14B is a schematic explanatory diagram showing the mechanism by which a thermoreversible recording medium changes between color-developed state and decolored state.
FIG. 15 is a schematic diagram showing an example of a RF-ID tag.
FIG.. 16 shows overlapped portions in an image in the present invention.
FIG.. 17 is a schematic explanatory diagram showing the light intensity of a laser beam used in the image recording step in Example 38, the light intensity distribution in the beam cross section cut along a direction orthogonal to the traveling direction of the beam.

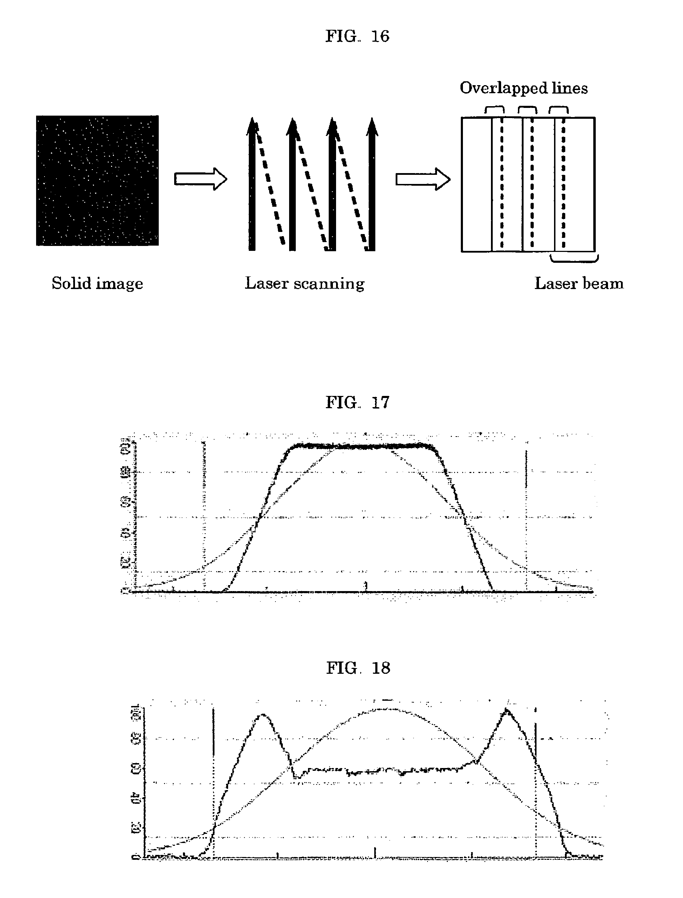

FIG. 18 is a schematic explanatory diagram showing the light intensity of a laser beam used in the image erasing step in Example 38, the light intensity distribution in the beam cross section cut along a direction orthogonal to the traveling direction of the beam.

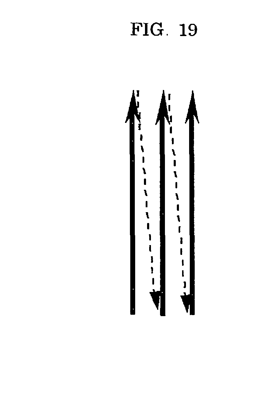

FIG. 19 shows a still yet further laser scanning mode as a reference.

### DETAILED DESCRIPTION OF THE INVENTION

### (Image Processing Method)

The image processing method according to the present invention comprises an image recording step and an image erasing step, and where necessary, further includes additional step(s) selected appropriately

The image processing method of the present invention encompasses an embodiment in which both image formation and image erasing are performed.

As used herein the term "image" means a character, symbol, or diagrammatic drawing which are formed of laser beam lines, encompassing barcodes and solid images. Thus, images formed of a single laser line (e.g., characters drawn with a single stroke of' a laser beam line) are not include.

As used herein, the term "overlapped portion" means an area where a plurality of laser beam lines are overlapped in an image. For example, when recording a solid image with a uniform density, it is necessary that adjacent laser beam lines are overlapped as shown in FIG. 16. For this reason, if laser irradiation of the next line starts right after the laser irradiation of the previous line before cooling, it results in excessive amount of energy applied to the overlapped portion, and therefore, degradation of the thermoreversible recording medium is likely to progress, and its cycle durability may be reduced, and image density may be reduced due to extra heat accumulation.

When sweeping laser beams in parallel at a predetermined distance over a thermoreversible recording medium in a first example the laser beams are applied so that they run in the same direction, and some part of this laser scanning involves a period where laser application is discontinued..

When sweeping laser beams in parallel at a predetermined distance over a thermoreversible recording medium according to the invention, the laser beams are applied in alternating directions, some part of the laser scanning involves a period where laser application is discontinued, and the period where laser application is discontinued involves no laser beam application from a first laser scanning end point to a second laser scanning point, the first laser scanning end point corresponding to the end point of laser scanning started at a first laser scanning starting point.

When sweeping laser beams in parallel at a predetermined distance over a thermoreversible recording medium in an other aspect of the invention, the laser beams are sequentially applied in alternating directions while avoiding continuous laser irradiation of nearby portions between adjacent laser beam lines, and some part of the laser scanning involves a period where laser application is discontinued

When sweeping laser beams in parallel at a predetermined distance over a thermoreversible recording medium in a second example, the laser beams are applied in the same direction while avoiding continuous laser irradiation of nearby portions between adjacent laser beam lines, and some part of the laser scanning involves a period where laser application is discontinued.

### <Image Recording Step and Image Erasing Step>

The image recording step of the image processing method of the present invention is a step wherein a thermoreversible recording medium that offers temperature-dependent changes in transparency or color tone is heated by irradiation with a laser beam to form an image thereon

The image erasing step of the image processing method of the present invention is a step wherein the thermoreversible recording medium is heated by irradiation with a laser beam to thereby erase the image formed thereon.

By heating the thermoreversible recording medium by applying a laser beam thereto, an image can be recorded on or erased from the medium without involving contact.

In general, in the image processing method of the present invention, image renewal (image erasing step) is first performed at the time when the thermoreversible recording medium is to be used again, followed by recording of a new image thereon by the image recording step. However, it should be noted that the order in which image recording and image erasing are performed is not specifically limited to the order described above; the image recording step may be first performed to record an image, and then the image erasing step may be performed to erase the image..

In the present invention, an image is recorded on or erased from an thermoreversible recording medium by heating it by application of laser beams in parallel at a predetermined distance between them, wherein the laser beams are applied sequentially over a medium in alternating directions, and furthermore, this laser scanning involves a period where laser application is discontinued. More specifically, provided is an image processing method wherein laser beams are controlled so that they not provided in areas where laser scanning turns back and/or areas where laser beams are overlapped, whereby unnecessary heat accumulation is avoided in these areas..

In the image processing method of the present invention, it is preferable that the period where laser application is discontinued be controlled by a scan control unit of an image processing apparatus so that laser application, which has been discontinued at a first laser scanning end point, starts at a second laser scanning point, the first laser scanning end point corresponding to the end point of laser scanning started at a first laser scanning starting point..

As shown for instance in FIGS. 3 to 9, specific laser beam control is adopted for a thermoreversible recording medium while ensuring that there is no or little adverse effect of laser-derived heat accumulated in turn back areas and/or overlapped portions of laser beam lines, which the heat accumulation is a problem in general laser beam scanning methods that involve application of laser beams over a thermoreversible recording medium, e..g.., raster scanning. Thus it is possible to provide an image processing method for a thermoreversible recording medium, the method being capable of eliminating adverse effects of laser-derived heat accumulated in turn back areas and/or overlapped portions of laser beam lines in the medium, of increasing cycle durability and image erasability of the thermoreversible recording medium, and of reducing image-erasing time.

A preferred example is a laser scanning control method shown in FIG.. 3, wherein laser beams are always applied linearly in the same direction (left to right in the drawing) at regular interval.

When a laser beam has reached the right-side edge, laser irradiation is stopped, the laser moves along a dotted line shown in FIGS. 3 and 4 to the next laser scanning start point by the movement of the mirror, laser irradiation is started, and a laser beam is swept over the medium from left to right. The dotted lines shown FIGS. 3 to 9 represent a state where laser irradiation is discontinued, i.e., laser irradiation is in an OFF state (discontinued state). As can be seen from FIG. 3, since the nearby portions (e.g., the top of the second arrow in FIGS. 3 and 4) in the turn back areas are not immediately irradiated with a laser beam, there are less adverse effects of heat accumulated in these areas, which are envisioned in conventional scanning methods, and thus it is possible to prevent degradation of the medium and to increase its cycle durability. In addition, since laser irradiation is discontinued in the turn back areas, there are no excessive heat accumulation and a proper image-erasing temperature range can be ensured in these areas, thereby efficiently preventing the generation of ghost images due to accumulated heat and increasing erasability.

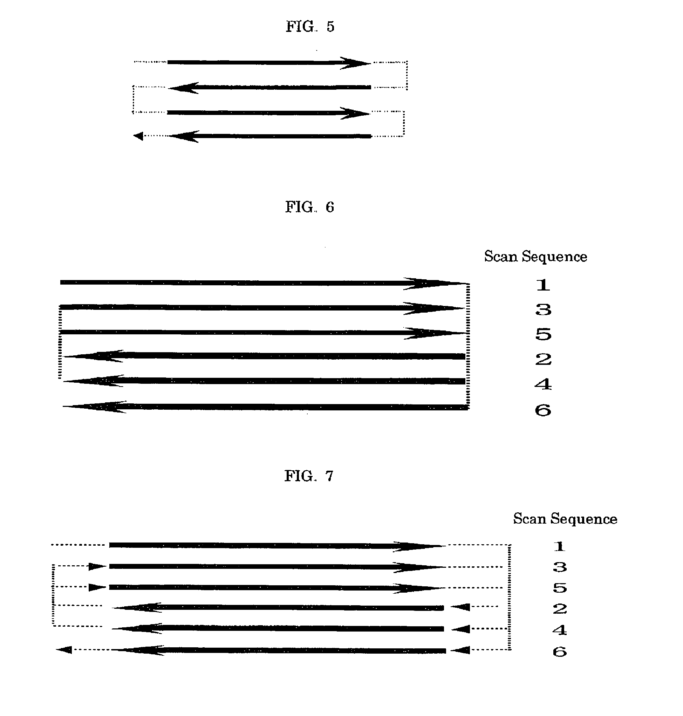

Another example is a laser scanning control method shown in FIG. 5, wherein laser beams are applied in alternating directions at regular intervals between them.. Basically this is a modification of raster scanning, a method used to sweep a light-emitting point such as a laser beam in a two-dimensional manner: a display is linearly scanned from a given start point in the X direction (horizontal scanning direction) to the end point, and a laser scanning point is moved in the Y direction (vertical scanning direction) to start laser scanning similarly, and this cycle is sequentially repeated. CRT images as in TV sets are a representative example of images created by raster scanning..

In this example, laser scanning control is performed in the manner shown in FIG. 5: Laser scanning starts at the left end of the top line, and laser irradiation is discontinued (OFF state) at the time when the laser beam has reached the right end. The laser is moved downward in the Y direction along the dotted line by the movement of the mirror, laser irradiation is started at the right end of the next line, proceeding to the left end. When the laser beam has reached the left end, laser irradiation is again discontinued (OFF state), the laser is moved downward in the Y direction along the dotted line by the movement of the mirror, laser irradiation is again started at the left end of the next line, proceeding to the right end, and this cycle is sequentially repeated. As can be seen from FIG. 5, in contrast to conventional laser scanning methods, laser irradiation proceeds to the next irradiation point (start point) while discontinuing laser irradiation in turn back areas.. Accordingly, there are less adverse effects of heat accumulated in these areas, which are envisioned in conventional scanning methods, and thus it is possible to prevent degradation of the medium and to increase its cycle durability.. In addition, while laser irradiation is discontinued (OFF state) in the turn back areas, the laser-guiding mirror is controlled along with laser movement to the next irradiation point, and therefore, the laser scanning speed never decreases. Accordingly, the image-erasing time can be reduced compared to conventional laser scanning methods. Moreover, since laser irradiation is discontinued in the turn back areas, there are no excessive heat accumulation and a proper image-erasing temperature range can be ensured in these areas, thereby efficiently preventing the generation of ghost images due to accumulated heat and increasing erasability. Note that any pre-scan time can be adopted; however, pre-scan time is preferably, 0.2ms to 5ms. A pre-scan time of less than 0.2ms results in excessive energy application in record start points or record end points because laser irradiation is conducted at a low scanning speed, which may damage thermoreversible recording media, whereas a pre-scan time of greater than 5ms may result in failure to finish recording in a desired time due to prolonged recording time.

An embodiment of the present invention is a laser scanning control method shown in FIGS. 6 and 7, wherein laser beams are applied in alternating directions while avoiding continuous laser irradiation of nearby portions between adjacent laser beam lines. For example, as shown in FIG. 6, cycles of laser beam applications are repeated in such a way that laser beam are swept in alternating directions in any order in the following manner: Laser scanning starts at the left end of the top line, and laser irradiation is discontinued (OFF state) at the time when the laser beam has reached the right end, and then the laser is moved along the dotted line by the movement of' the mirror to any non-nearby next start point, where laser irradiation is started and proceeds to the right end. As can be seen from FIGS. 6 and 7, in contrast to the laser scanning method shown in FIG.. 5, laser irradiation is so controlled that the next laser scanning start point and the previous laser scanning end point are separated, and laser irradiation is discontinued (OFF state) in this turn back area.. For this reason, it is possible to reduce adverse effects of accumulated heat as seen in FIG. 5 that is generated when the turn back area corresponds to the nearby portion of the previous laser scanning end point Thus it is possible to increase the cycle durability of media, and as in the case of laser scanning control method shown in FIG. 5, the laser-guiding mirror is controlled along with laser movement to the next irradiation point, and therefore, the laser scanning speed never decreases and it is possible to reduce image-erasing time while maintaining a constant scanning speed.. Furthermore, since there is no contact between adjacent turn back areas - area between the laser irradiation end point and next laser irradiation start point.. Accordingly, there are no excessive heat accumulation and a proper image-erasing temperature range can be ensured in these areas, thereby efficiently preventing the generation of ghost images due to accumulated heat and increasing erasability. Note that any pre-scan time can be adopted; however, pre-scan time is preferably 0.2ms to 5ms.

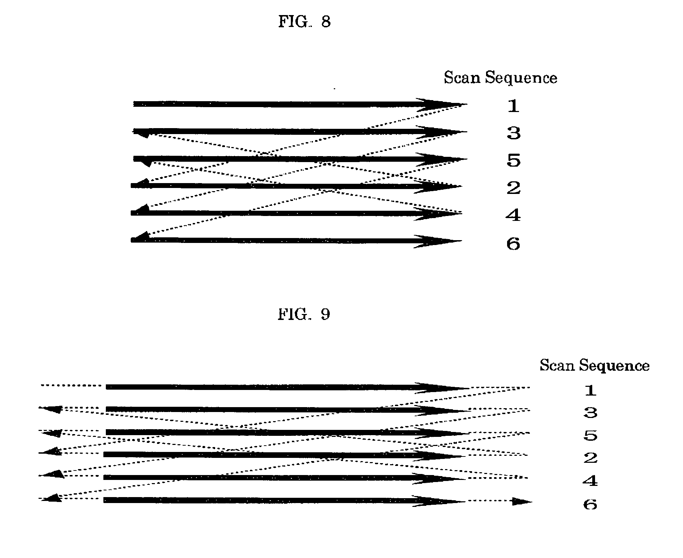

Yet another reference is a laser scanning control method shown in FIGS. 8 and 9, wherein laser beams are applied in the same direction while avoiding continuous laser irradiation of nearby portions between adjacent laser beam lines. For example, as shown in FIG. 8, cycles of laser beam applications are repeated in such a way that laser beam are swept in the same direction in any order in the following manner: Laser scanning starts at the left end of the top line, and laser irradiation is discontinued (OFF state) at the time when the laser beam has reached the right end, and then the laser is moved along the dotted line by the movement of the mirror to any non-nearby next start point, where laser irradiation is started and proceeds to the right end; when the laser beam has reached the right end, laser irradiation is again discontinued (OFF state), and then the laser is moved along the dotted line by the movement of the mirror to any non-nearby next start point, where laser irradiation is started and proceeds to the right end. As can be seen from FIGS.. 8 and 9, in contrast to the scanning method shown in FIG.. 3, laser irradiation is so controlled that the next laser scanning start point and the previous laser scanning end point are separated, and laser irradiation is discontinued (OFF state) in this turn back area. For this reason, it is possible to reduce adverse effects of accumulated heat as seen in FIG. 3 that is generated when laser scanning start points corresponds to the nearby portion of the previous laser scanning start point. Thus it is possible to increase the cycle durability of media, and as in the case of laser scanning control method shown in FIG. 3, the laser-guiding mirror is controlled along with laser movement to the next irradiation point, and therefore, the laser scanning speed never decreases and it is possible to reduce image-erasing time while maintaining a constant scanning speed and to increase the cycle durability of media. Note that any pre-scan time can be adopted; however, pre-scan time is preferably 0.2ms to 5ms.

Although laser beams are applied from left to right or right to left in FIGS. 3 to 9, the method of laser scanning is not particularly limited and can be appropriately determined accordingly; for example, laser scanning methods can adopt any laser beams that are applied from top to bottom, bottom to top, or obliquely.

In the present invention laser scanning is controlled by the movements of a mirrors - a scanning controlling unit provided to the image processing apparatus - a thermoreversible recording medium or the image processing apparatus or combinations thereof. However, those skilled in the art can use any laser scanning control as long as the laser beam scanning control of the present invention is achieved, without departing from the scope of the appended claims.

In at least one of the image recording step and image erasing step, a laser beam is applied to the thermoreversible recording medium in such a way that the light intensity of the central region of the light intensity distribution of the laser beam in its cross section cut along a direction substantially orthogonal to the beam travel direction (hereinafter may be referred to as "cross section orthogonal to the beam travel direction) is equal to or less than that of the peripheral regions.

When a certain pattern is to be created with a laser beam, the light intensity distribution of the laser beam in its cross section orthogonal to the beam travel direction generally has a Gaussian profile, wherein the light intensity is extremely higher in the central region than in the peripheral regions of the distribution. When such a laser beam with a Gaussian distribution is applied to the thermoreversible recording medium, the temperature of a portion of the medium corresponding to the central region increases too much, and subsequent cycles of image forming and image erasing causes degradation of that portion, resulting in poor cycle durability of the medium.

When the laser energy is reduced so as not to increase the temperature of the medium corresponding to the central region to a level that causes degradation, it results in small image size and a problem of reduced image contrast or prolonged time for image forming.

To avoid these problems, in the image processing method of the present invention, laser irradiation is controlled in at least one of the image formation step and image erasing step so that the light intensity of the central region of the light intensity distribution in its cross section orthogonal to the beam travel direction is equal to or less than that of the peripheral regions, whereby the cycle durability of the thermoreversible recording medium is improved while suppressing its degradation due to cycles of repetitive image formation and image erasing and maintaining image contrast without reducing the image size. Furthermore, when an image is formed or erased by sequential sweeping of laser beams in alternating directions, the amount of heat accumulated in the turn back areas and/or overlapped portions in laser beam lines in the scanning direction is reduced, whereby excellent cycle durability is achieved.

### (Central and Peripheral regions in the Light Intensity Distribution)

The "central region" in the light intensity distribution in the beam cross section cut along a direction substantially orthogonal to the traveling direction of the laser beam is defined as a region sandwiched by the tops of two maximum negative peaks of a differentiation curve that is obtained by differentiating a curve that represents the light intensity distribution twice, and "peripheral region" is defined as a region other than the "central region.

The "light intensity of the central region" means an intensity corresponding to a peak top of a light intensity distribution when it is expressed by a curved line; when the light intensity distribution has positive peaks, the light intensity of the central region corresponds to a peak top, whereas if it has negative peaks, the light intensity in the central region corresponds to a peak bottom. Furthermore, when the light intensity distribution has both positive and negative peaks, the light intensity in the central region means an intensity corresponding to a peak top that is closer to the center of the central region than are other peaks.

Moreover, when the light intensity of the central region is expressed by a straight line, it means an intensity corresponding to the top of that straight line.. In this case, the light intensity is preferably constant in the central region (the light intensity distribution in the central region is preferably expressed by a horizontal line)

The "light intensity of the peripheral region" means, even when it is expressed by either a curve or a straight line, an intensity corresponding to the top of the curve or straight line.

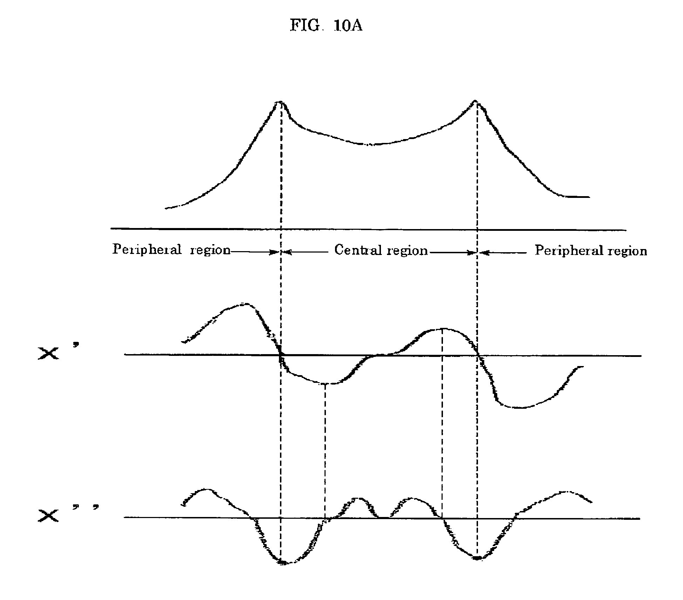

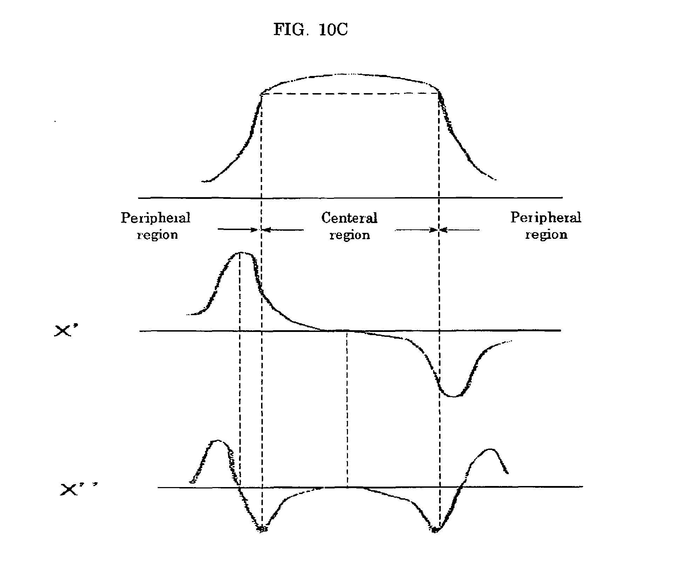

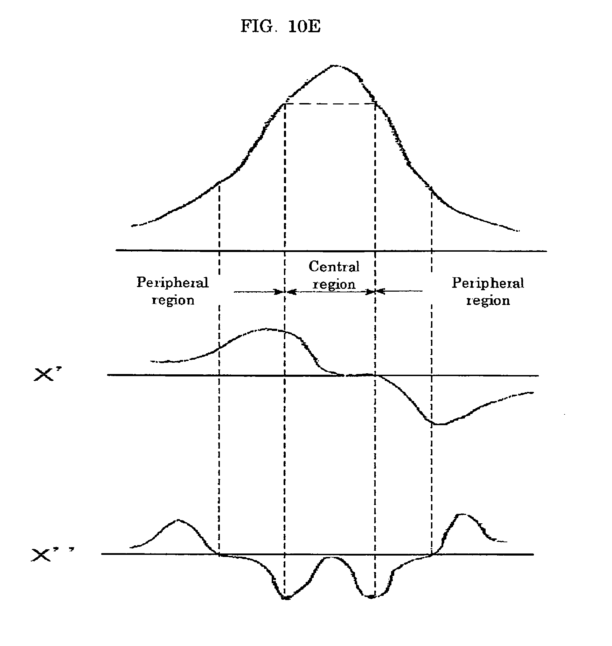

Examples of light intensities in the "central" and "peripheral" regions in the light intensity distribution in the beam cross section are shown in FIGS. 10A to 10E. Each curve in FIGS 10A to 10E shows, from the top of the drawing, a curve of light intensity distribution, a differentiation curve (X') which is a curve of the light intensity distribution differentiated once, and a differentiation curve (X") which is a curve of the light intensity distribution differentiated twice.

FIGS. 10A to 10D show light intensity distributions of the laser beam used in the image processing method the present invention, wherein the light intensity of the central region is equal to or less than that in the peripheral regions.

FIG.. 10E shows a light intensity distribution of a normal laser beam that has a Gaussian profile, wherein light intensity is significantly more intense in the central region than in the peripheral regions.

With regard to the relationship between the light intensities in the central region and the peripheral regions in the above-described light intensity distribution, the light intensity of the central region needs to be equal to or less than the light intensity of the peripheral region. Herein the phrase "equal to or less than" means that light intensity of the central region is 1.05 times or less, preferably 1.03 times or less, and more preferably 1.00 times or less the light intensity of the peripheral regions; the light intensity of the central region is most preferably smaller than the light intensity of the peripheral region, that is, less than 1.0 times.

When the light intensity of the central region is 1.05 times or less the light intensity of the peripheral region, it is possible to alleviate degradation of a thermoreversible recording medium due to temperature rise in the central regions.

In contrast, there is no particular lower limits as to the light intensity of the central region; it may be adjusted appropriately according to the intended purpose. It is preferably 0.1 times or more, and more preferably 0..3 times or more the light intensity of the peripheral region.

When the light intensity of' the central region is less than 0.1 times the light intensity of the peripheral region, the temperature of the thermoreversible recording medium at a spot of a laser beam fails to be raised sufficiently, and it may result in reduced image density in the central region compared to the peripheral regions, and in failure to erase images completely.

The light intensity distribution in the beam cross section can be measured using a laser beam profiler equipped with a CCD, etc.., in the case where a laser beam is emitted from such a laser source as a laser diode or YAG laser and has a wavelength of near infrared area. Moreover, when the laser beam is emitted from a CO₂ laser and has a wavelength of far infrared area, for example, an instrument with a combination of a beam splitter and a power meter, a high-power beam analyzer equipped with a high-sensitive, pyroelectric camera may be used for measurement because no CCD cannot be used.

The method for altering the light intensity distribution in the beam cross section from a Gaussian profile to one in which the light intensity of the central region is equal to or less than that of the peripheral region is not particularly limited and may be selected according to the intended purpose. A light intensity adjusting unit can be suitably used..

Preferred examples of the light intensity adjusting unit include lens, filters, masks, etc. Specifically, kaleidoscopes, integrators, beam homogenizers and aspheric beam shapers (a combination of intensity transformation lens and phase correction lens), etc.. are preferable.. Moreover, when a filter, mask or the like is used, light intensity may be adjusted by physically cutting through the center of the laser beam. In addition, when a mirror is used, it is possible to adjust the light intensity by use of, for example, a deformable mirror whose shape can be mechanically changed by computer, or a mirror with various values of reflectance or various degrees of surface irregularities.

It is also possible to adjust the light intensity by changing the distance between the thermoreversible recording medium and lens (i.e., focal length), and in addition, adjustment of light intensity can be readily achieved by using a semiconductor laser, YAG laser and the like that are coupled with fiber. Note that the method for adjusting light intensity by the light intensity adjusting unit will be described in detail along with the description of' the image processing apparatus of the present invention to be described later.

The diameter of the laser spot of laser beam used in the present invention may change depending on the laser output power and/or on the characteristics of thermoreversible recording media, and a suitable diameter is selected depending on the circumstances. The diameter of the laser spot preferably ranges from 0.01mm to 20mm.

The diameter of the laser spot for image recording may be different from that of a laser beam for image erasing.. In this case, the diameter of the laser spot for image recording is preferably 0.01mm to 10mm, more preferably 0.01mm to 5mm. Too large a laser spot diameter for image recording results in a large laser output power for heating the media to a given temperature, and therefore, there will be a problem of upsizing image forming apparatus. The diameter of the laser spot for image erasing is preferably 0.1mm to 20mm, more preferably 0.2mm to 15mm. Erasability increases with increasing diameter of the laser spot for image erasing, erasing time can also be reduced. On the other hand, too large a diameter of the laser spot for image erasing results in a large laser output power for heating the media to a given temperature, and therefore, erasability will be reduced or there will be a problem of upsizing image forming apparatus.

In FIGS. 3 to 9, the interval between adjacent laser irradiation areas is preferably 1/12 to 1/3 the laser spot diameter, more preferably, 1/10 or greater and, still more preferably, 1/8 or greater.

The laser scanning speed in the present invention is preferably 100mm/sec or more, more preferably 300mm/sec or more and, still more preferably, 500mm/sec or more. When the laser scanning speed is less than 100mm/sec, it takes time to complete image recording or image erasing. The laser scanning speed is preferably 20,000mm/sec or less, more preferably 15,000mm/sec or less and, still more preferably, 10,000mm/sec or less. If the laser scanning speed is greater than 20,000mm/sec, it may difficult to achieve uniform image recording and image erasing.

### (Image Processing Apparatus)

The image processing apparatus is used in the image processing method of the present invention, and includes at least a laser beam application unit and a laser intensity adjusting unit, and where necessary, includes additional unit(s) appropriately selected.

### -Laser Beam Application Unit-

The laser beam application unit is not particularly limited as long as it is capable of application of a laser beam and may be selected according to the intended purpose; examples include normally used lasers such as CO₂ laser, YAG laser, fiber laser and laser diode (LD).

The wavelength of the laser beam emitted from the laser beam application unit is not particularly limited and can be adjusted according to the intended purpose wavelength is preferably selected from the visible region to infrared region, and more preferably in the near-infrared region to far-infrared region in order to improving image contrast.

A wavelength of in the visible region may result in the reduction of contrast because an additive that generates heat upon absorption laser beam is colored as a result of image formation and erasing in the thermoreversible recording medium.

The wavelength of the laser beam emitted from the CO₂ laser is 10.6µm, a wavelength in the far-infrared region, and the thermoreversible recording medium absorbs the laser beam, thereby eliminating the need to add any additive that absorbs laser beam to generate heat for image formation and erasing on the thermoreversible recording medium. Moreover, because the additive may also absorb the visible light to some extents even when a laser beam having a wavelength of the near-infrared region is used, a CO₂ laser which can eliminate the need to add such an additive is advantageous in that it is possible to prevent reduction in image contrast.

Since the wavelength of the laser beams from YAG laser, fiber laser and laser diode is in the visible region to near-infrared region (several hundred micrometers to 1.2µm) and since current thermoreversible recording media do not absorb any laser beam of wavelengths in that region, it becomes necessary to add photothermal conversion material that absorbs light and coverts it to heat. However, the use of these lasers is advantageous because formation of high-resolution images can be made possible because of shorter wavelengths.

Moreover, since the YAG laser and fiber laser are of high power, they are advantageous in that it is possible to increase both the image formation speed and image erasing speed. Since the laser diode itself is small in size, it is advantageous in achieving downsizing of apparatus, and furthermore, in reducing their prices..

### -Light Intensity Adjusting Unit-

The light intensity adjusting unit has a function to change the light intensity of the laser beam..

The arrangement of the light irradiation adjusting unit is not particularly limited as long as it is placed at the laser emission side of the laser beam application unit, and the distance between the light intensity adjusting unit and the laser beam application unit can be appropriately set depending on the intended purpose.

The light intensity adjusting unit preferably has a function to change the light intensity in such a way that the light intensity of the central region is equal to or less than that of the peripheral region in the light intensity distribution of the laser beam, a distribution in a cross section obtained by cutting through the beam in a direction substantially orthogonal to the traveling direction of the laser beam.. The degradation of the thermoreversible recording medium due to repetitive cycles of formation and erasing of image can be suppressed and cycle durability can be improved while keeping image contrast constant.

Meanwhile, the detail of the relationship between the light intensity of the central region and the light intensity of the peripheral region in the light intensity distribution of cross-section in a direction approximately orthogonal to the traveling direction of the laser beam is as described above.

The light intensity adjusting unit is not particularly limited and may be selected accordingly; preferred examples thereof include lens, filters and masks.. Specifically, kaleidoscopes, integrators, beam homogenizers and aspheric beam shapers (a combination of intensity transformation lens and phase correction lens) may be suitably used for example, the light intensity can be adjusted by physically cutting the center of the laser beam with a filter, mask, etc. In addition, when a mirror is used, it is possible to adjust the light intensity by use of, for example, a deformable mirror whose shape can be mechanically changed by computer, or a mirror with various values of reflectance or various degrees of surface irregularities.

Furthermore, it is possible to change the light intensity of the central region such that it become equal to or less than the light intensity of the peripheral regions by adjusting the distance between the thermoreversible recording medium and the fθ lens. In other words, as the distance between the thermoreversible recording medium and fθ lens (i.e., focal distance) is changed, the light intensity distribution in the beam cross section can be changed from a Gaussian distribution to one in which the light intensity of the central region is diminished.

In addition, adjustment of light intensity can be easily achieved by fiber-coupling of laser diode, YAG laser, and the like..

An example of a method for adjusting light intensity using an aspheric beam shaper as the light intensity adjusting unit will be described below..

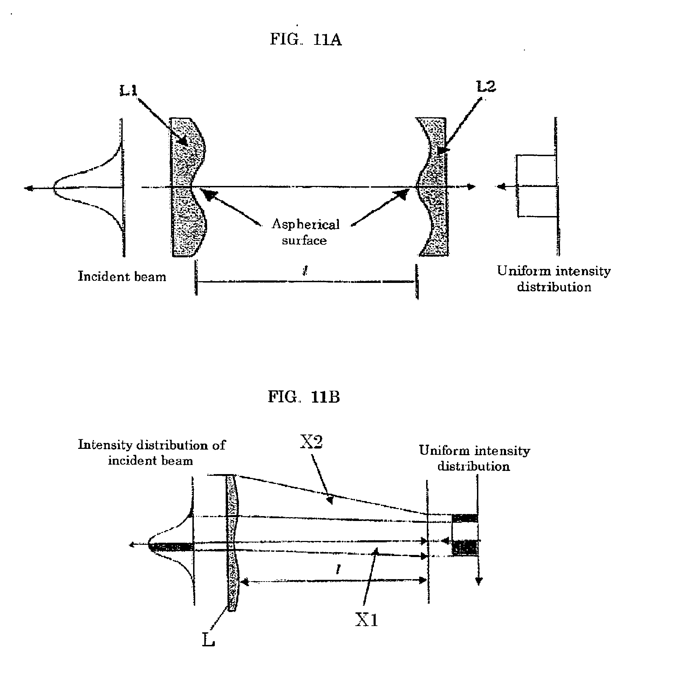

When a combination of an intensity change lens and a phase correction lens is used for example, two aspheric lenses are arranged in the light path of the laser beam from the laser beam unit as shown in FIG.. 11A. The intensity is then changed by the first aspheric lens L1 at a target position (distance 1) so as to make the light intensity of the central region of the beam to be equal to or less than (flat top shape in FIG. 11A) the light intensity of the peripheral region of the laser in its light intensity distribution. Phase correction is performed by the second aspheric lens L2 for parallel propagation of the intensity-changed laser beam. As a result, the light intensity distribution, which has a Gaussian profile, can be changed..

Furthermore, only an intensity alternation lens L may be arranged in the light path of the laser beam emitted from the laser beam application unit as shown in FIG. 11B. In this case, the light intensity of the central region can be altered so as to be equal to or less than (flat top shape in FIG.. 11B) the light intensity of the peripheral regions by scattering the incoming laser beam that has an intensity distribution with a Gaussian profile in an area where intensity is high (inside) as shown by arrow X1 and by focusing the incoming laser beam in an area where intensity is low (outside) as shown by arrow X2.

Furthermore, an example of a method for adjusting light intensity by use of a combination of a fiber coupled laser diode and a lens as the light intensity adjusting unit will be described below..

With a fiber coupled laser diode, the light intensity distribution of' the laser beam emitted from the fiber end differs in shape from the Gaussian distribution and has a shape that is intermediate between the Gaussian distribution and the flat-top shape because the laser beam propagates through fiber while being repetitively reflected by the fiber In order to for the above-noted light intensity distribution to have a flat-top shape, a combination of multiple convex lenses and/or concave lenses is attached to the fiber end as a focusing optical system.

The image processing apparatus is similar in basic configuration to the one that is generally called a laser marker except that the former includes at least the foregoing laser beam application unit and light intensity adjusting unit.. The image processing apparatus further includes at least a transmission unit, a power control unit and a program unit.

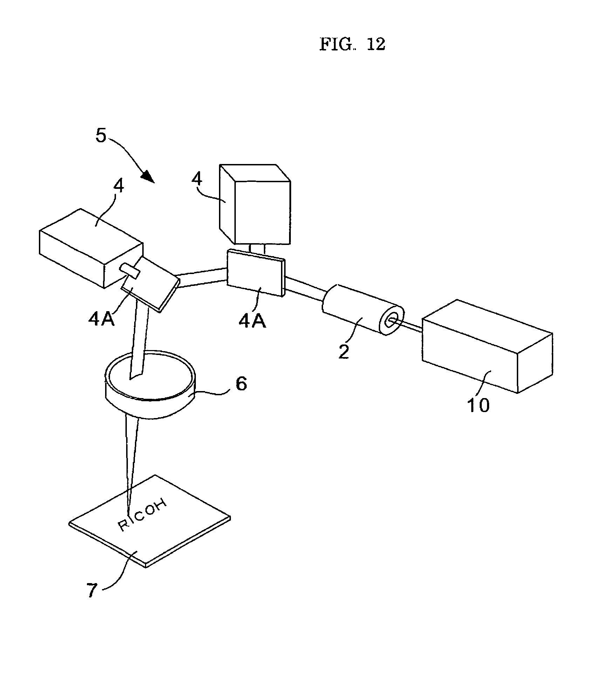

An example of the image processing apparatus is shown in FIG. 12, with a primary focus on the laser beam application unit.

In the image processing apparatus shown in FIG. 12, as the light intensity adjusting unit, a mask (not shown) which cuts through the center of a laser beam is placed in the light path of a laser marker equipped with a CO₂ laser source with an output power of 40W (LP-440 by Sunx Ltd.), so that it is made possible to adjust the light intensity distribution of the laser beam in its cross section, which is cut along a direction orthogonal to its traveling direction, in such a way that the central region of the laser beam differs in light intensity from the peripheral regions..

The specification of the laser beam application unit, or the image recording/image erasing head, is as follows:
Possible laser output range: 0.1W to 40W
Head movable range: no limit
Spot diameter: 0.18mm to 10mm
Scanning speed: max. 12,000mm/s
Irradiation range: 110mm x 110mm
Focus distance: 185mm

The oscillation unit is composed, for example, of a laser oscillator 10, a beam expander 2, a scanning unit 5 and a fθ lens 6.

The laser oscillator 10 is a necessary unit for obtaining a laser beam of high intensity and high directivity.. For example, a mirror is placed on both sides of the laser medium, and the laser medium is pumped (supplied with energy) to generate an induced emission by increasing the number of excited atoms to create an invented population. A beam of light that oscillates only in an optical axis direction is selectively amplified, thereby increasing the directivity of light and emitting a laser beam from the output mirror..

The scanning unit 5 is composed of galvanometers 4 each having a mirror 4A attached to it. The two mirrors 4A that are respectively oriented in X and axis direction and Y axis direction are so configured that they are rotated at a high speed to thereby cause a laser beam emitted from the laser oscillator 10 to be applied over a thermoreversible recording medium 7 for image recording or erasing..

The fθ lens 16 is a lens that causes a laser beam, which has been reflected by the rotating mirrors 4A attached to the galvanometers 4 to propagate at an equiangular speed, to move across a surface of the thermoreversible recording medium 7 at a constant speed.

The power control unit is composed of (1) a power source for electric discharge (in the case of CO₂ laser) or a power source for driving a light source (YAG laser, etc.) which excites a laser medium, (2) a power source for driving galvanometers, (3) a power source for cooling a Peltier-element, etc.. (4) a control unit for controlling the image processing apparatus as a whole, etc.

The program unit is a unit which receives conditions such as laser beam intensity and laser scanning speed, etc. and creates and edits characters or the like to be recorded for image forming and erasing, through touch panel input or key board input.

The laser beam application unit, or the image recording/ erasing head, is mounted to the image processing apparatus, and the image processing apparatus is also equipped with a transfer unit for thermoreversible recording media, a control unit for the transfer unit, a monitor (touch panel), etc.

A high-contrast image can be created or erased repeatedly at high speed on or from a thermoreversible recording medium such as a label attached to a container like cardboard without involving contact, and the degradation of the thermoreversible recording medium by repetitive cycles of image formation or erasing operations can be suppressed by the image processing method of the present invention. Thus the image processing method of the present invention are particularly suitable for use in distribution/delivery systems. In such applications, for example, images can be created or erased on or from the label during the transportation of cardboard by the belt conveyer, thereby shortening the shipment time because there is no need to stop the line. Moreover, the cardboard to which the label has been attached can be reused as it is without having to peel off the label for another image erasing or recording cycle.

Furthermore, degradation of the thermal reversible recording medium due to repetitive cycles of image formation and erasing can be effectively suppressed because the image processing apparatus has the light intensity adjusting unit which alters the light intensity of a laser beam.

### <Image Formation and Erasing Mechanism>

The mechanism by which an image is formed or erased is of two types: transparency is changed in a reversible manner depending on the temperature; and color tone is changed in a reversible manner depending on the temperature.

In the former case, the foregoing low-molecular-weight organic substance in the thermoreversible recording medium is dispersed in the foregoing resin in the form of particles and transparency is changed in a reversible manner between clear state and clouded state depending on the temperature.

The visible change in transparency is originated with the following phenomena: (1) in clear state, since the particles of the low-molecular-weight organic substance dispersed in the resin base material are attached firmly to the particles of the resin base material with no spaces between them, the incoming light from one side is transmitted to the other side without being scattered; therefore, the medium looks transparent; and (2) In clouded state, on the other hand, since the particles of the low-molecular-weight organic substance are formed of their microscopic crystals and there are gaps (airspaces) in the interface between the crystals or the interface between the particles of the low-molecular weight organic substance and the particles of the resin base material, whereby the incoming light from one side is refracted and scattered in the interface between the airspaces and crystals or the interface between the airspaces and the resin particles; therefore, the medium looks white..

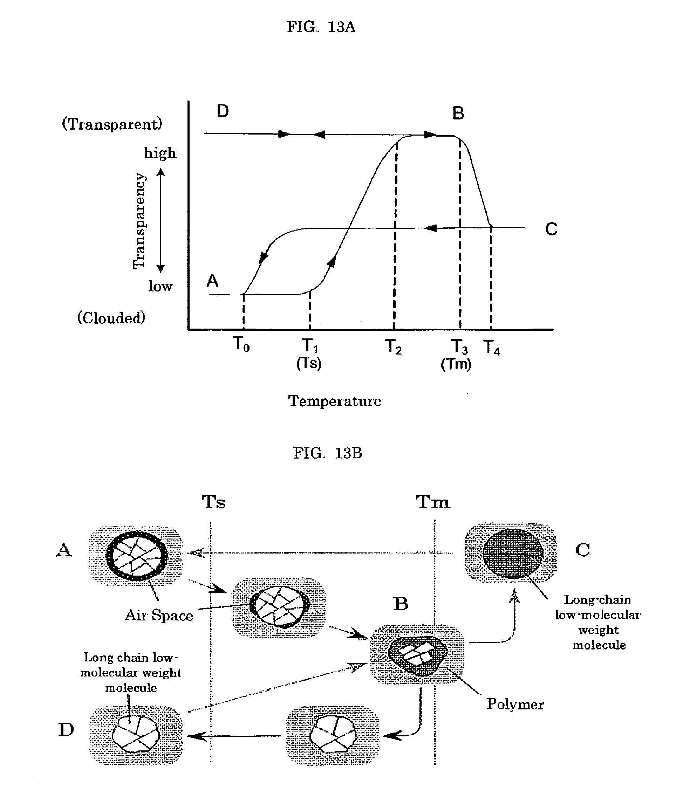

First, an example of a temperature-transparency conversion curve of the thermoreversible recording medium containing a reversible thermosensitive recording layer (hereinafter may be referred to as "recording layer") made of the foregoing resin in which the foregoing low-molecular-weight organic substance is dispersed is shown in FIG. 13A.

The recording layer is in a clouded opaque state (A) at room temperature of To or less, for example. When the layer is heated, it gradually begins to turn transparent at a temperature T₁, it becomes transparent (B) when heated to a temperature ranging from T₂ to T₃ and it stays transparent (D) even it is returned to the room temperature T₀ or less again from the transparent (B) state. This is considered to be due to the following phenomenon: the resin starts to get soften around the temperature T₁ and shrinks as it continues to be softened, reducing the number of interfaces between the resin particles and the particles of the low-molecular-weight organic substance or the number of the air spaces inside the particles, whereby transparency increases gradually; meanwhile the low-molecular weight organic substance is in a half-molten state at temperatures T₂ to T₃ and it becomes transparent by filling the remaining airspaces with particles of the low-molecular-weight organic substance, and when it is cooled with seed crystals left, they undergo crystallization at a relatively high temperature; and since the resin is still in a softened state at this time, the resin follows the volume change of the particles associated with crystallization and no airspaces appear, whereby clear state is maintained.

When the recording layer is further heated to the temperature T₄ or higher, it becomes half-transparent (C), an intermediate state between maximum transparent and maximum opaque states.. When the temperature is lowered, it returns to the initial clouded opaque state (A) without returning its clear state again. This is considered to be because the recording layer is in an excessively-cooled state after the low-molecuiar-weight organic subtance is completely melted at temperature of T₄ or higher and is crystallized at a temperature slightly higher than T₀, and the resin cannot follow the volume change of the particles associated with crystallization, allowing airspaces to appear.

However, in the temperature-transparency conversion curve shown in FIG. 13A, transparency in each state may change according to the type of the resin, low-molecular-weight organic substance, etc.

The mechanism by which the transparency of the thermoreversible recording medium changes is shown in FIG. 13B, the thermoreversible recording medium being turned transparent (clear) or clouded in a reversible manner on heating..

In FIG. 13B, one long-chain low-molecular-weight particle and surrounding polymers are taken out, showing how an airspace appears and disappears upon heating and cooling.. In clouded state (A), an airspace appears between a high-molecular-weight particle and a low-molecular-weight particle (or inside the particle), forming light-scattering state. When the particles are heated to a level greater than the softening point (Ts) of the high-molecular-weight particle, the space shrinks and transparency increase When it is further heated to a level near the melting point (Tm) of the low-molecular-weight particle, a part of the low-molecular-weight particle is melted, filling the space with the low-molecular-weight particle due to volume expansion of the molten low-molecular-weight particle and thus the space disappears, resulting in transparent state (B). When it is cooled from hereon, the low-molecular-weight particle is crystallized right below the melting point, no airspace appears, and clear state (D) is maintained even at room temperature.

When the particles are heated to a level greater than the melting point of the low-molecular-weight particle, it causes difference in refractive index between the molten low-molecular-weight particle and the surrounding high-molecular-weight particle, resulting in half transparent state (C).. When the particles are then cooled to room temperatures, the low-molecular-weight particle undergoes crystallization at a temperature below the softening point of the high-molecular-weight particle due to the excessive cooling phenomenon. Because the high-molecular-weight particle is in a glass state at this point and it cannot follow the volume reduction of the low-molecular-weight particle by crystallization, and therefore, an airspace appears, and the particles return to original clouded state (A).

In the latter case wherein color tone is changed in a reversible manner depending on the temperature, the low-molecular-weight organic substance before melted corresponds to a leuco dye and a reversible developer (hereinafter may be referred to as "developer"), and the low-molecular-weight organic substance after melted but not crystallized corresponds to the leuco dye and the developer, and color tone is changed in a reversible manner between clear state and color developing state by heating.

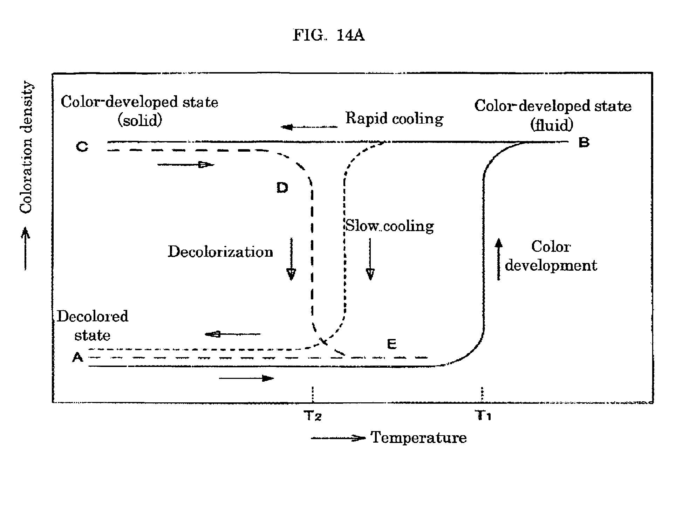

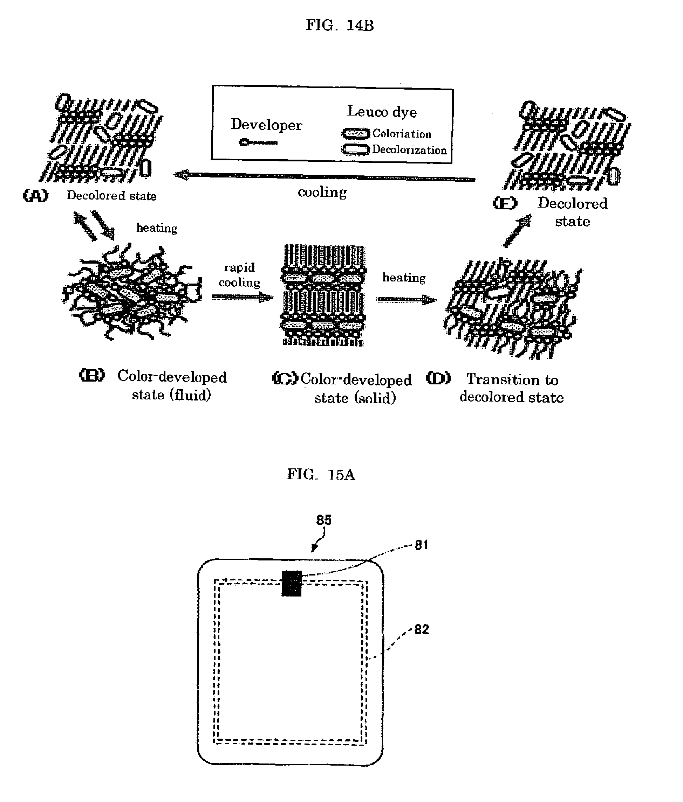

FIG. 14A shows an example of the temperature-color developing density conversion curve of the thermoreversible recording medium having a reversible thermosensitive recording layer made of resin in which the leuco dye and the developer are contained therein. FIG. 14B shows the mechanism by which the thermoreversible recording medium becomes transparent or colored in a reversible manner on heating.

First, the recording layer which is in a decolorized state (A) is heated, the leuco dye and the developer are melted and mixed together at a melting temperature T₁ and color is developed and the recording layer is in a molten color-developed state (B).. When the layer is cooled rapidly, it can be cooled to room temperature while being in a molten color developing state (B) and the molten color-develop state (B) is stabilized, resulting in a stable color developed state (C). Whether or not it succeeds in obtaining this color developing state depends on the cooling rate from the molten state; when the layer is cooled gradually, discoloring occurs in the course of cooling and it returns to its original decolorized state (A) or a state of relatively lower density than the color developing state (C) by rapid cooling. Meanwhile, when the recording layer is again heated from the color developed state (C), discoloring occurs at temperature T₂, a temperature lower than the color developing temperature (from D to E), and when it is cooled, the recording layer returns to its original state, a decolorized state (A).

The color developing state (C), obtained by rapid cooling of the molten recording layer, is a state in which the leuco dye and the developer are mixed together in such a way that molecules may come in contact with each other for reaction; it is often that case that color developing state (C) is in a solid state. In this state a molten mixture (the color developed mixture) of the leuco dye and the developer is crystallized for development of color, and the color development is considered to be stabilized with this configuration.. On the other hand, in the decolorized state the leuco dye and the developer are in phase separation state. In this state, molecules of at least one of the leuco dye and developer are clustered to form a domain or are crystallized; therefore, the leuco dye and the developer are considered to be separated from each other in a stabilized state by agglomeration or crystallization.. In many cases, more complete discoloring occurs due to the phase separation of the leuco dye and the developer and crystallization of the developer..

Note in FIG. 14A that both discoloring achieved by gradual cooling from a molten state and discoloring achieved by heating from a color-developed state involve changes in the structure of aggregated molecules at temperature T₂, thereby causing phase separation and/or crystallization of the developer..

Thus, upon recording a solid image, barcode or the like on a thermoreversible recording medium having a reversible thermosensitive recording layer made of resin in which the leuco dye and the developer are contained therein, a rapid cooling state is created in cases where there is no adverse effect of heat on at least one of laser-back portions and laser-overlapped portions in the image formation step, preventing the separation of the leuco dye from the developer that have been mixed together. In this way, the color-developed state is considered to be maintained.

### (Thermoreversible Recording Medium)

The thermoreversible recording medium used in the image processing method of the present invention includes at least a support and a reversible thermosensitive recording layer, and where necessary, further includes additional layers such as a protective layer, an intermediate layer, an undercoat layer, a back layer, a photothermal conversion layer, an adhesion layer, a sticking layer, a coloring layer, an air layer, and an optical reflective layer suitably selected.. Each of these layers may be of a single layer structure or a multilayer structure.

### -Support-

The shape, structure and size, etc.. of the support are not particularly limited and may be selected according to the intended purpose. For example, the shape of the support is of flat plate, the structure thereof may be a single layer structure or multilayer structure, and the size thereof may be selected according to the size, etc.. of the thermoreversible recording medium..

Examples of materials of the support include inorganic materials and organic materials.

Examples of the inorganic materials include glass, quartz, silicon, silicon oxides, aluminum oxides, SiO₂ and metals.

Examples of the organic materials include paper, cellulose derivatives such as cellulose triacetate, synthetic paper, films such as polyethylene terephthalate, polycarbonate, polystyrene, polymethylmethacrylate.

These inorganic materials and organic materials may be used alone or in combination. Of these, organic materials and films such as polyethylene terephtahlate, polycarbonate, polymethylmethacrylate, and the like are preferable and polyethylene terephthalate is particularly preferable.

It is preferable to modify the support surface by performing corona discharge, oxidation reaction (chromic acid), etching, easy-to-bond process, antistatic treatment or the like in order to improve adhesion of a coating layer.

It is also preferable for the support to be white-colored by adding a white pigment such as titanium oxide, etc.

The thickness of the support is not particularly limited and may be set accordingly and it is preferably 10µm to 2,000µm and more preferably 50µm to 1,000µm

### -Reversible Thermosensitive Recording Layer-

The reversible thermosensitive recording layer (hereinafter may be referred to as "recording layer") contains at least a material that offers temperature-dependent reversible changes in transparency or color tone, and further contains other ingredients where necessary.

The material that offers temperature-dependent reversible changes in transparency or color tone is a material capable of exhibiting a phenomenon in which temperature-dependent observable changes occur reversible and of changing to a color-developed state or a decolorized state in a relative manner according to the difference in heating temperatures and the difference in cooling rate after heating. The observable changes can be divided into two types: changes in color, and change in shape- The former change is due for example to the change in transmittance, reflectivity, absorption wavelength, degree of scattering, and the like.. In practical, the thermoreversible recording medium offers various color changes based on the different combinations of these factors.

The material that offers temperature-dependent reversible changes in transparency or color tone is not particularly limited and may be selected from those known in the art; examples include a mixed material of two or more polymers which change between clear state and clouded state based on the degree of compatibility between the polymers (see JP-A No. 61-258853), materials using phase changes of liquid crystal polymers (see JP-A No. 62-66990), and materials which are in a first color state at a first predetermined temperature that is higher, than room temperature and are in a second color state when heated to a second predetermined temperature that is higher than the first predetermined temperature and cooled.

Of these, materials that offer color changes between the first and second predetermined temperatures are particularly preferable because temperatures can be easily controlled and high contrast is obtainable.

Examples include materials which are in a first color state at a first predetermined temperature that is higher than room temperature and are in a second color state when heated to a second predetermined temperature that is higher than the first predetermined temperature and then cooled, and materials which are further heated to a third predetermined temperature or higher, which the temperature is higher than the second predetermined temperature.

Examples of such materials include materials which become transparent at a first predetermined temperature and become clouded at a second predetermined temperature (see JP-A No. 55-154198), materials which develop color at a second predetermined temperature and decolorize at a first predetermined temperature (see JP-A Nos. 04-224996, 04-247985 and 4-267190), materials which become clouded at a first predetermined temperature and become transparent at a second predetermined temperature (see JP-A No. 03-169590), and materials which develop colors such as black, red and blue, etc., at a first predetermined temperature and decolorize at a second predetermined temperature (see JP-A Nos. 02-188293 and 02-188294).

A thermoreversible recording medium containing resin base material and a low-molecular-weight organic substance (e.g., a higher fatty acid) dispersed in the resin base material is advantageous in that the first and second predetermined temperatures are relatively low and thus a low-energy image formation or erasing is possible. Moreover, because the color developing and erasing mechanism is a physical change which relies on the solidification of resin and crystallization of low-molecular-weight organic substance, the medium offers a strong resistance to the environment.

Furthermore, because a thermoreversible recording medium containing a leuco dye and reversible developer (both will be described later), which develops color at a second predetermined temperature and decolorizes at a first predetermined temperature, exhibits a transparent state and color-developed state in a reversible manner, and when it is in the color-developed state, it exhibits black, blue and other colors; therefore, it is possible to obtain high-contrast images.

The low-molecular-weight organic substance (a substance which is dispersed in a resin base material and becomes transparent at a first predetermined temperature and becomes clouded at a second predetermined temperature) in the thermoreversible recording medium is not particularly limited as long as it is a substance whose structure changes from a polycrystalline structure to a single crystalline structure on heating in the recording layer, and can be selected accordingly.. In general, substances with melting points ranging from about 30°C to about 200°C are usable and those with melting points of 50°C to 150°C are preferable.

Such low-molecular-weight organic substances are not particularly limited and may be selected accordingly and examples include alkanols; alkanediols; halogen alkanols or halogen alkane diols; alkylamines; alkanes; alkenes; alkines; halogenalkanes; halogenalkenes; halogenalkines; cycloalkanes; cycloalkenes; cycloalkines; saturated or unsaturated, mono or dicarboxylic acids and esters, amides or ammonium salts thereof; saturated or unsaturated halogen fatty acids and esters, amides or ammonium salts thereof aryl carboxylic acids and esters, amides or ammonium salts thereof; halogen allyl carboxylic acids and esters, amides or ammonium salts thereof; thioalcohols; thiocarboxylic acids and esters, amines or ammonium salts thereof; and carboxylic acid esters of thioalcohols.
These may be used alone or in combination-

The number of carbon atoms in each of these chemical species is preferably 10 to 60, more preferably 10 to 38 and most preferably 10 to 30. The alcohol groups in the esters may be saturated or unsaturated and may be substituted with halogens..

For example, the low-molecular-weight organic substance preferably contains in its molecule at least one species or moiety selected from oxygen, nitrogen, sulfur and halogen, such as -OH, - COOH, -CONH-, -COOR, -NH-, -NH₂, -S-, -S-S-, -O-, and halogen atoms..

More specifically, examples of these compounds include higher fatty acids such as lauric acid, dodecanoic acid, myristic acid, pentadecanoic acid, palmitic acid, stearic acid, behenic acid, nonadecane, arginic acid and oleic acid; and esters of higher fatty acids such as methyl stearate, tetradecyl stearate, octadecyl sterate, octadecyl laurate, tetradecyl palmitate, and dodecyl behenate. Of these, higher fatty acids are preferable; higher fatty acids having 16 or more carbon atoms, such as palmitic acid, stearic acid, behenic acid, and lignoceric acid are more preferable; and higher fatty acids having 16 to 24 carbon atoms are most preferable for the low-molecular-weight organic substances used in the third aspect of the image processing method.

In order to widen the temperature range within which the thermoreversible recording medium can be made transparent, the above-mentioned low-molecular-weight organic substances may be used in combination accordingly or the mentioned low-molecular-weight organic substance(s) may be combined with other material(s) having different melting points than those of the low-molecular-weight organic substances These combinations are disclosed in JP-A Nos. 63-39378, 63-130380 and JP-B No. 2615200, but are not specifically limited to thereto..

The resin base material forms a layer in which particles of the low-molecular-weight organic substance are uniformly dispersed and retained, and provides an effect on its transparency at maximum transparency.. For this reason, the resin base material is preferably a resin having high transparency, mechanical stability and appropriate film-forming performance

Such resins are not particularly limited and may be selected accordingly and examples include polyvinyl chlorides; vinyl chloride copolymers such as vinyl chloride-vinyl acetate copolymer, vinyl chloride-vinyl acetate-vinyl alcohol copolymer, vinyl chloride-vinyl acetate-maleic acid copolymer, vinyl chloride-acrylate copolymer, and polyvinylidene chloride; vinylidene chloride copolymers such as vinylidene chloride-vinyl chloride copolymer and vinylidene chloride-acrylonitrile copolymer; polyesters; polyamides; polyacrylates, polymethacrylates, or acrylate-methacrylate copolymers; silicone resins; and the like. These may be used alone or in combination.

The ratio of the low-molecular-weight organic substance to the resin (resin base material) in the recording layer is preferably 2:1 to 1:16 and more preferably 1:2 to 1:8 on a mass basis.

When the ratio of the low-molecular-weight organic substance to the resin is less than 2:1, it may be difficult to form a film which retains the low-molecular-weight organic substance in the resin base material, and when it is greater than 1:16, it may be difficult to make the recording layer opaque due to the small amount of the low-molecular-weight organic substance.

Additional ingredients such as a high-boiling point solvent, a surfactant, etc., may be added to the recording layer in addition to the low-molecular-weight organic substance and resin, in order to facilitate formation of a transparent image..

The high-boiling point solvent is not particularly limited and may be selected accordingly and examples include tributyl phosphate, tri-2-ethylhexyl phosphate, triphenyl phosphate, tricresyl phosphate, butyl oleic acid, dimethyl phthalate, diethyl phthalate, dibutyl phthalate, diheptyl phthalate, di-n-octyl phthalate, di-2-ethylhexyl phthalate, diisononyl phthalate, dioctyldecyl phthalate, diisodecyl phthalate, butylbenzyl phthalate, dibutyl adipate, di-n-hexyl adipate, di-2-ethylhexyl adipate, di-2-ethylhexyl azelate, dibutyl sebacate, di-2-ethylhexyl sebacate, diethylene glycol dibenzoate, triethylene glycol di-2-ethylbutyrate, methyl acetyl ricinolate, butyl acetyl ricinolate, butylphthalyl butylglycolate, and tributyl acetyl citrate..

The surfactants and additional ingredients are not particularly limited and may be selected accordingly and examples include polyalcohol higher fatty acid esters; polyalcohol higher alkyl ethers; lower olefin oxide adducts of polyalcohol higher fatty acid esters, higher alcohols, higher alkylphenols, higher fatty acid higher alkylamines, higher fatty acid amides, oils and fats, and polypropylene glycol; acetylene glycol; Na, Ca, Ba or Mg salts of higher alkylbenzene sulfonates; Ca, Ba or Mg salts of higher fatty acids, aromatic carboxylic acids, higher fatty acid sulfonates, aromatic sulfonates, mono esters of sulfuric acid or mono or di-ester phosphates; low-degree sulfate oils; poly long-chain alkyl acrylates; acrylic oligomers; poly long-chain alkyl methacrylates; monomer copolymers containing long-chain alkyl methacrylate-amine; styrene-maleic anhydride copolymers; and olefin-maleic anhydride copolymers.

The method for preparing the recording layer is not particularly limited and may be selected accordingly. For example, the recording layer may be prepared by applying and drying a solution into which two ingredients, the resin base material and low-molecular-weight organic substance are dissolved, or a dispersion solution, which is the solution (a solvent in which at least one type selected from the organic low-molecular material is insoluble) of the resin base material in which the low-molecular-weight organic substance is dispersed in the form of particles, on a support, for example..

The solvent used for the preparation of the recording layer is not particularly limited and may be selected according to the type of the resin base material and the low-molecular-weight organic substance: examples include tetrahydrofran, methyl ethyl ketone, methyl isobutyl ketone, chloroform, carbon tetrachloride, ethanol, toluene, and benzene. Meanwhile, the low-molecular-weight organic substance precipitates as particles and exists as being dispersed in the obtained recording layer in the case where dispersion solution was used, as well as in the case where the solution was used.

The low-molecular-weight organic substance in the thermoreversible recording medium may be composed of the leuco dye and the reversible developer and may develop color at a second predetermined temperature and decolorize at a first predetermined temperature.

The leuco dye itself is a colorless or light-colored dye precursor. The leuco dye is not particularly limited and may be selected from known leuco dyes and preferred examples include leuco compounds such as triphenylmethane phthalide, triarylmethane, fluoran, phenothiazine, thioferuolan, xanthene, indophthalyl, spiropyran, azaphthalide, chromenopyrazole, methine, rhodamineanilinolactam, rhodaminelactam, quinazoline, diazaxanthene and bislactone. Of these, fluoran- or phthalide-based leuco dyes are particularly preferable for excellent color development decolorization performance, color, storage stability, etc. These may be used alone or in combination.. By stacking layers that offer different color tones, it is possible to obtain thermoreversible recording media that can provide multicolor and full colors.

The reversible developer is not particularly limited as long as it can develop or erase colors reversibly by heat and may be selected accordingly Preferred examples include a compound having one or more structures selected from (1) a structure having a function to develop colors of the leuco dye (phenolic hydroxyl group, carboxylic group and phosphoric groups, for example) and (2) a structure in which cohesive force between molecules is controlled (a structure to which long-chain hydrocarbon group is linked) within the molecule. Meanwhile, the linked site may have a hetero atom-containing linking group of two or more valencies, and at least any one of similar linking groups and aromatic groups may be contained in the long-chain hydrocarbon group

Phenols are particularly preferable as (1) the structure having a function to develop colors of the leuco dye.

Long-chain hydrocarbon groups having 8 or more carbon atoms are preferable as (2) the structure in which bonding force between molecules is controlled, wherein the number of carbon atoms is more preferably 11 or more and the upper limit of the number of carbon atoms is preferably 40 or less and more preferably 30 or less.

Among the reversible developers described above, phenol compounds represented by the following General Formula (1) are preferable, and phenol compounds represented by the following General Formula (2) are more preferable 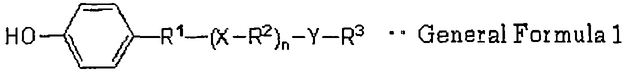 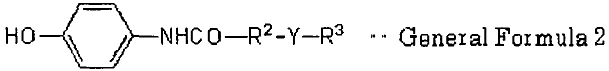 where "R¹" represents a single bond or an aliphatic hydrocarbon group having 1 to 24 carbon atoms; "R²" represents an aliphatic hydrocarbon group which may be substituted and have 2 or more carbon atoms wherein the number of carbon atoms is preferably 5 or more, more preferably 10 or more; "R³" represents an aliphatic hydrocarbon group having 1 to 35 carbon atoms wherein the number of carbon atoms is preferably 6 to 35, more preferably 8 to 35; and these aliphatic hydrocarbon groups may be identical or different.

The sum of the number of carbon atoms of "R¹", "R²" and "R³" is not particularly limited and may be set accordingly and the lower limit is preferably, 8 or less, more preferably 11 or less, and the upper limit is preferably 40 or less, more preferably 35 or less.

When the sum of the number of carbon atoms is less than 8, color developing stability and decolorization capability may be reduced.

The aliphatic hydrocarbon groups may be of straight chain or branched chain and may contain a unsaturated bond; however they are preferably of straight chain.. Furthermore, examples of substituents that bond to the hydrocarbon groups include hydroxyl group, halogen atoms, alkoxy group, etc.

"X" and "Y" may be identical or different and each represents a bivalent group containing nitrogen atom or oxygen atom; specific examples include oxygen atom, amide group, urea group, diacylhydrazine group, oxalic diamide, and acylurea group. Among them, amide group and urea group are preferable.

"n" represents an integer of 0 to 1.

It is preferable for the developer (electron-receptive compound) to be used in combination with a compound having at least one of - NHCO-group and -OCONH-group in its molecule as a decolorization accelerator. This is preferable because intermolecular interactions are induced between the decolorization accelerator and the reversible developer during the course of creating a decolorized state, to thereby improve color development and decolorization.

The decolorization accelerator is not particularly limited and may be selected according to the intended purpose, and preferred examples include compounds represented by the following General Formulas (3) to (9).

R¹-NHCO-R² General Formula 3

R¹-NHCO-R³-CONH-R² General Formula 4

R¹-CONH-R³-NHCO-R² General Formula 5

R¹-NHCOO-R² General Formula 6

R¹-NHCOO-R³-OCONH-R² General Formula 7

R¹-OCONH-R³-NHCOO-R² General Formula 8

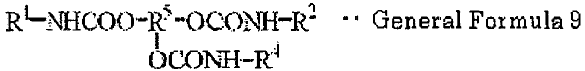

where "R¹," "R²" and "R⁴" each represent a straight-chain alkyl group, branched alkyl group or unsaturated alkyl group, having 7 to 22 carbon atoms; "R³" represents a methylene group having 1 to 10 carbon atoms, and "R⁵" represents a trivalent functional group having 4 to 10 carbon atoms.

The ratio at which the color development agent (electron-donative color-development compound) and developer (electron-acceptive compound) are mixed cannot be determined flatly because a suitable ratio varies depending on the combinations of compounds used, however, the reversible developer preferably contains the color development agent and developer in proportions of 1:0,1-20, more preferably 1:0.2-10 on a mole basis.. If the proportion of the developer falls outside this preferred range, it results in poor color development density.

When the decolorization accelerator is added, it is preferably added in an amount of 0.1 parts by mass to 300 parts by mass per 100 parts by mass of developer, and more preferably 3 parts by mass to 100 parts by mass, Note that the color development agent and the developer may be encapsulated in a microcapsule before use.

Binder resin and, where necessary, various additives may be added to the reversible recording layer for the purpose of improving or controlling coating properties or color development and decolorization properties; examples of such additives include surfactants, plasticizers, conductive agents, filling agents, antioxidants, light stabilizers, color stabilizers, and decolorization accelerators.

The binder resin is not particularly limited as long as it is capable of binding the recording layer to the support, and one or more known resins can be suitably used along or in combination. Resins that can be cured or hardened on heating or by irradiation with ultraviolet ray or electron ray are preferable in order to improve cycle curability In particular, thermosetting resins using isocyanate compounds as cross-linking agents are preferable. Examples of the thermosetting resins include resins having groups such as hydroxyl group and/or carboxylic group which react with cross-linking agents, and resins obtained by copolymerization of monomers with hydrocarbon groups and/or carboxylic groups and other monomers. Specific examples of such thermosetting resins include phenoxy resins, polyvinyl butyral resins, cellulose acetate propionate resins, cellulose acetate butyrate resins, acrylpolyol resins, polyester polyol resins, and polyurethane polyol resins. Among them, acrylpolyol resins, polyester polyol resins and polyurethane polyol resins are particularly preferable.

The acrylpolyol resins can be prepared by known solution polymerization, suspension polymerization, emulsion polymerization, etc., of (metha)acrylic acid ester monomers and carboxylic group-containing unsaturated monomers, hydroxyl group-containing unsaturated monomers or other ethylenically unsaturated monomers.

Examples of the hydroxyl group-containing unsaturated monomers include hydroxylethylacrylate (HEA), hydroxylpropylacrylate (HPA), 2-hydroxyethylmethacrylate (HEMA), 2-hydroxypropylmethacrylate (HPMA), 2-hydroxybutylmonoacrylate (2-HBA), 1,4-hydroxybutylmonoacrylate (1-HBA), and the like. Of these, 2-hydroxyethylmethacrylate is preferable because it results in excellent crack resistance and excellent coat durability of coated film when a monomer having primary hydroxyl group is used..

In the recording layer the color development agent and the binder resin are preferably mixed together in proportions of 1:0.1-10 on a mole basis.. If the proportion of binder resin is too small, it may result in insufficient thermal strength of the recording layer. If the proportion of hinder resin is too larger, it may result in poor color development density..

The cross-linking agent is not particularly limited and may be selected accordingly, and examples include isocyanates, amino resins, phenol resins, amines, epoxy compounds, and the like. Among them, isocyanates are preferable and polyisocyanate compounds having multiple isocyanate groups are particularly preferable.

Examples of' isocyanates include hexamethylene diisocyanate (HDI); tolylene diisocyanate (TDI); xylylene diisocyanate (XDI); adducts, burettes and isocyanurates thereof by trimethylolpropane; and blocked isocyanates.

The cross-linking agent is preferably added to the binder resin in such an amount that the ratio of the number of functional groups in the cross-linking agent to the number of active groups in the binder resin is 0.01 to 2

If the amount of the cross-linking agent added to the binder resin is too small enough to satisfy this range, it results in poor heat strength, and if the amount is too large to satisfy this range, it may result in adverse effects on color development and decolorization properties.

Furthermore, any catalyst that is used in this type of reaction may be used as a cross-linking accelerator Examples of the cross-linking accelerator include third amines such as 1,4-diazabicyclo [2,2,2] octane and metal compounds such as organic tin compound.

Gel fraction of the thermosetting resin after cured by heat is preferably, 30% or more, more preferably 50% or more and most preferably 70% or more. A gel fraction of less than 30% may result in poor cross-linking condition, which leads to poor durability

Whether the binder resin has been cured (cross-linked state) or not (non-cross-linked state) can be determined by dipping the coated film in a solvent of high solubility.. More specifically, the binder resin in a non-crosslinked state begins to dissolve in the solvent, and will not be left in the solute.

The additional ingredients that may be contained in the recording layer are not particularly limited and may be selected accordingly; examples include surfactants and plasticizers for facilitating image formation

The surfactants are not particularly limited and may be selected accordingly, and examples include anion surfactants, cationic surfactants, non-ion surfactants, and ampholytic surfactants.

The plasticizers are not particularly limited and may be selected accordingly and examples include phosphates, fatty acid esters, phthalates, diacid esters, glycol, polyester plasticizers, and epoxy plasticizers.

For solvents for preparing the recording layer, dispersing devices for coating solution, methods of coating, drying, hardening, etc", the recording lawyer, known solvents and methods that can be used in the back layer can be used.

Note that the coating solution for recording layer may be prepared by dissolving corresponding ingredients in a solvent using the dispersing device, or may be prepared by dissolving each ingredient in a suitable solvent to prepare coating solutions for the ingredients and combining them together. In addition, the ingredients dissolved in the coating solution by heating may be precipitated by rapid or gradual cooling.

The method for preparing the recording layer is not particularly limited and may be selected accordingly Preferred examples include (1) a method in which the support is coated with a coating solution for recording layer, the solution obtained by dissolving the solution the the binder resin, the electron-donative color-development compound and the electron-acceptive compound are dissolved and/or dispersed in a solvent, and the mixture is then cross-linked at the time when it is made into a sheet-like shape by evaporation of the solvent or after that, (2) a method in which the support is coated with a coating solution for recording layer, the solution obtained by dissolving only binder resin is dissolved in a solvent and dispersing the electron-donative color-development compound and the electron-acceptive compound in the solvent, and the mixture is then cross-linked at the time when it is made into a sheet-like shape by evaporation of the solvent or after that, and (3) a method in which the binder resin, electron-donative color-development compound and electron-acceptive compound are heated and mixed together without using any solvent and the mixture is cross-linked after being formed into a sheet-like shape and cooled. Note also in these methods that a sheet-shaped thermoreversible recording medium can be provided without using any support.

Solvents used in the methods (1) and (2) are not particularly limited and may be selected accordingly. Although it cannot be selected flatly because a suitable solvent differs depending on the type of binder resin, the electron-donative color-development compound and the electron-acceptive compounds however, examples include tetrahydrofran, methyl ethyl ketone, methyl isobutyl ketone, chloroform, carbon tetrachloride, ethanol, toluene, and benzene.

The electron-acceptive compound exists in the recording layer in the form of dispersed particles.

In order for the coating solution for the recording layer to exhibit high performance as a coating solution for coating material, various pigments, antifoaming agent, dispersing agent, slipping agent, antiseptic agent, cross-linking agent, plasticizer, etc. may be added to the coating solution for the recording layer.

The method for forming the recording layer is not particularly limited and may be selected accordingly.. The recording layer can be prepared by transporting the support in the form of a continuous roll or a cut sheet and applying thereon the coating solution for recording layer by known method, such as blade coating, wire bar coating, spray coating, air knife coating, bead coating, curtain coating, gravure coating, kiss coating, reverse roll coating, dip coating, dye coating, or the like.

The drying condition of the coating solution for recording layer is not particularly limited and may be selected accordingly, for example, the coating solution is dried at room temperature to 140°C for about 10 seconds to 10 minutes.

The thickness of the recording layer is not particularly limited and may be adjusted accordingly; for example, it is preferably 1µm to 20pm and more preferably 3pm to 15µm. When the thickness of the recording layer is less than 1µm image contrast may be lowered due to decrease in color developing density, and when the thickness is greater than 20µm, heat expands greatly in the layer and thus areas where temperature does not reach the color development temperature and no color is developed appear and a desired color development density may not be obtained.

Where necessary, the thermoreversible recording medium of the present invention may include, in addition to the recording layer, addtional layer(s) appropriately selected, such as a protective layer, an intermediate layer, a undercoat layer, a back layer, a photothermal conversion layer, an adhesion layer, a sticking layer, a coloring layer, an air layer, and/or an optical reflective layer Each of these layers may be of a single layer structure or a multilayer structure

### -Protective Layer-

It is preferable to provide a protective on the recording layer for the purpose of protecting the recording layer. The protective layer is not particularly limited and may be selected accordingly, and it may be formed into a multilayer; however, it is preferably disposed on an exposed outermost surface..

The protective layer contains at least a binder resin and further contains other ingredient(s) such as a filler, a lubricant and/or a coloring pigment as needed.

The resin used for the protective layer is not particularly limited and may be selected accordingly and preferred examples include UV-curable resins, thermosetting resins, and electron beam-curable resins.. Of these, UV-curable resins and thermosetting resins are particularly preferable..

Since UV-curable resins can form very hard films after being cured and can prevent surface damages due to physical contact and/or deformation of media by laser heating, it is possible to provide a thermoreversible recording medium with excellent cycle durability..

Similarly thermosetting resins can harden a surface, though their hardening capability is slightly lower than that of' UV-curable resins, and can provide a thermoreversible recording medium of excellent cycle durability.

The UV-curable resins are not particularly limited and may be selected from known UV-curable resins accordingly Examples include oligomers of urethane acrylates, epoxy acrylates, polyester acrylates, polyether acrylates, vinyls and unsaturated polyesters; and monomers of various monofunctional or polyfunctional acrylates, methacrylates, vinyl esters, ethylene derivatives, allyl compounds, and the like. Of these, polyfunctional monomers or oligomers of tetrafunctional or more are particularly preferable. By mixing two or more different these monomers or oligomers, hardness, degree of shrinkage, flexibility, strength, etc., of a resin film can be adjusted appropriately.

In order to cure the foregoing monomer or oligomer by irradiation with ultraviolet ray, it is necessary to use a photopolymerization initiator and a photopolymerization accelerator.

Photopolymerization initiators can be classified broadly into radical reaction type and ion reaction type, and the radical reaction type can be further classified into photo-cleavable type and hydrogen-abstraction type..

The photopolymerization initiator is not particularly limited and may be selected accordingly and examples include isobutylbenzoinether, isopropylbenzoinether, benzoinethyletherbenzoinmethylether, 1-pbonyl-1,2-propanedion-2-(o-ethoxycarbonyl) oxime, 2,2-dimethoxy-2-phenylacetophenonebenzyl, hydroxycyclohexylphenylketone, diethoxyacetophenone, 2-hydroxy-2-methyl-1-phenylpropane-1-on, benzophenone, chlorothioxanthone, 2-chlorothioxanthone, isopropylthioxanthone, 2-methylthioxanthone, and chlorine-substituted benzophenone. These may be used alone or in combination.

The photopolymerization accelerator is not particularly limited and may be selected accordingly.. It is preferably the one having an effect of improving curing rate for the photopolymerization initiator of hydrogen abstraction type such as benzophenone, thioxanthone, etc. and examples include aromatic tertiary amines or aliphatic amines. Specific examples include isoamyl p-dimethylamino benzoate, and ethyl p-dimethylamino benzoate. These may be used alone or in combination..

The added amount of the photopolymerization initiator and photopolymerization accelerator is not particularly limited and may be adjusted accordingly, and it is preferably 0.1% by mass to 20% by mass and more preferably 1% by mass to 10% by mass relative to the total amount of the resin component in the protective layer..

Ultraviolet irradiation for curing the UV-curable resin can be performed using any of known ultraviolet irradiation devices and examples of thereof include ones equipped with a light source, a lamp fitting, an electric source, a cooling device, a carrier device, etc.

Examples of the light source include a mercury lamp, a metal halide lamp, a potassium lamp, a mercury xenon lamp, and a flash lamp The wavelength of light emitted from the light source is not particularly limited and may be suitably selected according to the UV absorption wavelengths of the photopolymerization initiator and photopolymerization accelerator contained in the composition for the thermoreversible recording medium.

The condition used for UV irradiation is not particularly limited and may be set accordingly for example, the lamp output and light-propagation rate may be suitably determined according to the irradiation energy needed to cross-link the resin.

Moreover, for the purpose of improving transportability of the media, a releasing agent such as a polymerizable group-containing silicone, silicone-grafted polymer, wax, or zinc stearate, and/or a lubricant such as silicone oil may be added to the protective layer.. The added amount of these agents is preferably 0.01% by mass to 50% by mass, more preferably 0.% by mass to 40% by mass relative to the total amount of the resin component in the protective layer. These agents may be used singly or in combination. Moreover, in order to remove static electricity, it is preferable to add a filler, more preferably a needed-shaped conductive filler..

The particle diameter of the inorganic pigment preferably ranges from 0.01µm to 10.0µm, more preferably 0.05µm to 8.0µm. The inorganic pigment is preferably added in an amount of 0.001 parts to 2 parts, more preferably 0.005 parts to 1 part per 1 part of the resin

Examples of the organic filler include silicone resins, cellulose resins, epoxy resins, nylon resins, phenol resins, polyurethane resins, urea resins, melamine resins, polyester resins, polycarbonate resins, styrene resins, acrylic resins, polyethylene resins, formaldehyde resins, and polymethyl methacrylate resins.

For the conductive filler, titanium oxide whose surface is covered with antimony-doped tin oxide is particularly preferable.

Additive(s) such as known surfactants, leveling agents, and/or antistatic agents may be added to the protective layer

For the thermosetting resins, resins similar to the binder resins used in the Recording layer can be used.

Furthermore, polymers having a UV-absorbing structure (hereinafter may be referred to as "UV-absorbing polymers") may be used.

As used herein the term "polymer having a UV-absorbing structure" refers to a polymer having a UV-absorbing structure (e.g., UV-absorbable group) in the molecule.

Examples of the UV-absorbing structure include a salicylate structure, cyanoacrylate structure, benzotriazole structure, and benzophenone structure. Of these, the benzotriazole structure and benzophenone structure are particularly preferable in view of their excellent light resistance

The polymers having the UV-absorbing structure are not particularly limited and may be selected accordingly, and examples include copolymers of 2-(2'-hydroxy-5'-methacryloxyethylphenyl)-2H-benzotriazole, 2-hydroxyethyl methacrylate and styrene, copolymers of 2-(2'-hydroxy-oxy-5'-methylphenyl) benzotriazole, 2-hydroxypropyl methacrylate and methylmethacrylate, copolymers of 2-(2'-hydroxy-3'-t-butyl-5'-methylphenyl)-5-chlorobenzotriazole, 2-hydroxyethyl methacrylate, methyl methacrylate and t-butyl methacrylate, and copolymers of 2,2,4,4-tetrahydroxybenzophenone, 2-hydroxypropyl methacrylate, styrene, methyl methacrylate and propyl methacrylate. These may be used alone or in combination.

It is preferable that the thermosetting resins be cross-linked; therefore, it is preferable to adopt thermosetting resins having a group that reacts with a curing agent, such as hydroxy group, amino group, and carboxylic group, and polymers having hydroxyl groups are particularly preferable. The thermosetting resins preferably have a hydroxyl value of 10 or more, more preferably 30 or more and most preferably 40 or more for sufficient coated-film strength in order to increase the protective layer's strength By imparting sufficient strength to the coated film, degradation of the thermoreversible recording medium can be suppressed even after cycles of image formation and erasing.

Preferred examples of the curing agents include the one similar to the curing agents used for the recording layer.

For solvents for preparing the protective layer, dispersing devices for coating solution for protective layer, methods of coating, drying, hardening, etc., the protective layer, known solvents and methods that can be used for the recording layer can be used When a UV-curable resin is used, a curing step is necessary after application and drying of the coating solution for protective layer.. However, the UV irradiation device, light source, irradiation condition, etc. are as described above.

The thickness of the protective layer is not particularly limited and may be adjusted accordingly, and it is preferably 0.1µm to 20µm, more preferably 0.5µm to 10µm and most preferably 15µm to 6µm. When the thickness is less than 0.1µm, the function as a protective layer of the thermoreversible recording medium cannot be fully exerted and the medium is vulnerable to degradation due to heat after a certain level of cycle, which unables the medium to be used repeatedly When the thickness is greater than 20µm, it results in failure to transmit sufficient heat to a recording layer, a layer placed below the protective layer, which may in turn make image printing or erasing by heat impossible. - Intermediate Layer.

An intermediate layer is preferably disposed between the recording layer and the protective layer, for the purposes of improving adhesion properties between the recording layer and the protective layer, preventing degeneration of the recording layer owing to application of the protective layer thereon, and preventing the additives in the protective layer from transferring into the recording layer, etc.., whereby storage stability a color-developed image can be improved.

The intermediate layer contains at least a binder resin and further contains additional ingredient(s) such as a filler, a lubricant and/or a coloring pigment where necessary

The binder resin in the intermediate layer is not particularly limited and may be selected accordingly, and resins for the recording layer, thermoplastic resins and thermosetting resins can be used.

Examples of the binder resin include polyethylene, polypropylene, polystyrene, polyvinylalcohol, polyvinylbutyral, polyurethane, saturated polyester, unsaturated polyester, epoxy resins, phenol resins, polycarbonates, and polyamides..

It is preferable for the intermediate layer to contain a UV-absorbing agent. The UV-absorbing agent may be either an organic UV-absorbing agent or an inorganic UV-absorbing agent.

Examples of organic UV-absorbing agents include benzotriazole-based UV-absorbing agents, benzophenone-based UV-absorbing agents, salicylate ester-based UV-absorbing agents, cyanoacrylate-based UV-absorbing agents and cinnamate-based UV-absorbing agents. Of these, benzotriazole-based UV-absorbing agents are preferable.

Among benzotriazole-based UV-absorbing agents, those in which hydroxyl groups are protected by nearby bulky functional groups are particularly preferable, and preferred examples thereof include 2-(2'-hydroxy-3',5'-di-t-butylphenyl) benzotriazole, 2-(2'-hydroxy-3'-t-butyl-5'-methylphenyl) benzotriazole, 2-(2'-hydroxy-3',5'-di-t-butylphenyl)-5-chlor-obenzotriazole and 2-(2'-hydroxy-3'-t-butyl-5'-methylphenyl)-5-chlorobenzotriazole Furthermore, any of these UV-absorbing skeletons may be suspended from copolymerized polymers such as acrylic resins and styrene resins.

The content of the organic UV-absorbing agent is preferably 0.5% by mass to 10% by mass relative to the total amount of the resin component in the intermediate layer.

The inorganic UV-absorbing agents are preferably particles of metal compounds with an average particle diameter of 100nm or less, and examples include metal oxides such as zinc oxide, indium oxide, alumina, silica, zirconia oxide, tin oxide, cerium oxide, iron oxide, antimony oxide, barium oxide, calcium oxide, bismuth oxide, nickel oxide, magnesium oxide, chrome oxide, manganese oxide, tantalum oxide, niobium oxide, thorium oxide, hafnium oxide, molybdenum oxide, ferrous ferrite, nickel ferrite, cobalt ferrite, barium titanate and potassium titanate or complex oxides thereof; metal sulfides such as zinc sulfide and barium sulfide or sulfated compounds thereof; metal carbides such as titanium carbide, silicon carbide, molybdenum carbide, tungsten carbide and tantalum carbide; metal nitrides such as aluminum nitride, silicon nitride, boron nitride, zirconium nitride, vanadium nitride, titanium nitride, niobium nitride and gallium nitride. Of these, ultrafine particles of metal oxides are preferable, and silica, alumina, zinc oxide, titanium oxide and cerium oxide are more preferable. Meanwhile, surfaces of these metal compounds may be treated with silicone, wax, organic silane or silica.

The content of the inorganic ultraviolet absorbing agent is preferably 1% to 95% in volume fraction.

The content of the inorganic UV-absorbing agent is preferably 1% by volume to 95% by volume.. The organic and inorganic UV-absorbing agents may be contained in the recording layer rather than the intermediate layer.

Moreover, UV-absorbing polymers may be used, and may be cured by cross-linking agents. The UV-absorbing polymers used in the protective layer can be adopted.

The thickness of the intermediate layer is not particularly limited and may be adjusted accordingly and it is preferably 0.1µm to 20µm and more preferably 0.5µm to 5µm. For solvents for preparing the intermediate layer, dispersing devices for coating solution for intermediate layer, methods of coating, drying, hardening, etc.., the intermediate layer, known solvents and methods that can be used for the protective layer can be used.

### -Under layer-

The under layer may be disposed between the recording layer and the support for the purposes of achieving high sensitivity by efficiently utilizing heated applied, improving adhesion properties between the support and the recording layer, and preventing infiltration of the recording layer material into the support. The under layer contains at least hollow particles, and contains a binder resin and, where necessary, contains additional ingredient(s).

Examples of the hollow particles include single-hollow particles each having one void therein, and multiple-hollow particles each having a plurality of voids therein. These hollow particles may be used alone or in combination.

Materials of the hollow particles are not particularly limited and may be selected accordingly, and preferred examples include thermoplastic resins.

The hollow particles may be prepared as needed or may be purchased ready⁻made. Examples of commercial products include Microsphere R-300 (by Matsumoto Yushi-Seiyaku Co., Ltd.), Lopake HP1055 and Lopake HP433J (by Zeon Corp) and SX866 (by JSR Corp).

The added amount of the hollow particles in the under layer is not particularly limited and may be adjusted accordingly and it is preferably 10% by mass to 80% by mass, for example

For the binder resin for hollow particles, binder resins similar to those used for the preparation of the recording layer or the layer containing a polymer having a UV-absorbing structure may be used.

At least one of' an inorganic filter (e.g.., calcium carbonate, magnesium carbonate, titanium oxide, silicon oxide, aluminum hydroxide, kaolin, and talc) and an organic filler of various types may be contained in the under layer.

Additional additive(s) such as a lubricant, a surfactant, and/or a dispersing agent may be contained in the under layer

The thickness of the under layer is not particularly limited and may be adjusted accordingly, and it is preferably 0.1µm to 50µm, more preferably 2µm to 30µm and most preferably 12µm to 24µm.

### -Back Layer-

In the present invention, a back layer may be disposed on a side of the support which is opposite of the side on which the recording layer is disposed, to prevent curl or electrical charging of the thermoreversible recording medium and to improve transportability The back layer contains at least a binder resin and, where necessary, further contains additional ingredient(s) such as a filler, a conductive filler, a lubricant and/or a coloring pigment..

The binder resin for the back layer is not particularly limited and may be selected accordingly, and examples include thermosetting resins, UV-curable resins, and electron beam-curable resins.. Of these, UV-curable resins and thermosetting resins are particularly preferable.

UV-curable resins, thermosetting resins, fillers, conductive fillers, and lubricants that are similar to those used for the recording layer, protective layer and the intermediate layer can suitably be used for the preparation of the back layer.

### -Adhesion Layer and Sticking Layer-

It is possible to provided a thermoreversible recording label by disposing an adhesion layer or sticking layer on a side of the support where the recording layer is not formed General materials can be used to prepare the adhesion layer or sticking layer.

Specific examples of materials for the adhesion layer or sticking layer include, but not limited to, urea resins, melamine resins, phenol resins, epoxy resins, vinyl acetate resins, vinyl acetate-acrylic copolymers, ethylene-vinyl acetate copolymers, acrylic resins, polyvinylether resins, vinyl chloride-vinyl acetate copolymers, polystyrene resins, polyester resins, polyurethane resins, polyamide resins, chlorinated polyolefin resins, polyvinyl butyral resins, acrylic acid ester copolymers, methacrylic acid ester copolymers, natural rubbers, cyanoacrylate resins, and silicone resins.

The materials for the adhesive layer and the sticking layer may be of hot-melt type.. Release paper may also be used or it may be of non-release paper type. By disposing the adhesive layer or the sticking layer as described above, the Recording layer can be attached to a entire or part of the surface of a thick substrate like a vinyl chloride card with magnetic stripes, where it is difficult to form a recording layer thereon. This improves convenience of the thermoreversible recording medium, e..g.., a part of magnetically stored information can be displayed.

The thermoreversible recording label to which such adhesive layer or sticking layer is disposed is suitable for thick cards such as IC cards, optical cards, and the like.

When a photothermal conversion layer containing at least a photothermal conversion material is disposed, the photothermal conversion material is normally used in combination with resin. The resins used for the photothermal conversion layer are not particularly limited and may be selected from known resins accordingly as long as they are capable of holding inorganic materials and organic materials; thermoplastic resins and thermosetting resins are preferable.

The photothermal conversion layer has a function to absorb a laser beam and generate heat.. Main materials for the photothermal conversion layer can be classified broadly into inorganic materials and organic materials.

Examples of the inorganic materials include carbon blacks, metals such as Ge, Bi, In, Te, Se and Cr and semimetals or alloys thereof, and these are formed into a layer by vacuum evaporation, or bonding together particulate materials with resin or the like.. Various dyes may suitably be used as the organic materials depending on the wavelength at which light is absorbed, and when a laser diode is used as a light source, near-infrared absorbing dyes having an absorption peak at near 700nm to 1,500nm are used.. Specific examples include thereof cyanine dyes, quinine dyes, quinoline derivatives of' indonaphthol, phenylenediamine-based nickel complexes and phthalocyanine dyes. It is preferable to select a photothermal conversion material which offers excellent heat resistance because cycles of printing and erasing are repeated.

The near-infrared absorbing dyes may be contained in the recording layer singly or in combination.. In this case, the recording layer also serves as a photothermal conversion layer.

### -Coloring Layer-

A coloring layer may be disposed between the support and the recording layer of the thermoreversible recording medium for the purpose of improving visibility..

The coloring layer may be formed by applying on a target surface a solution or dispersion solution containing a coloring agent and binder resin followed by drying, or by simply attaching a colored sheet to the target surface.

It is also possible to provide the thermoreversible recording medium with a color printing layer Examples of the coloring agent in the color printing layer are various types of dyes and pigments contained in color inks used for conventional full-color point.

Examples of the binder resin include various thermoplastic resins, thermosetting resins, UV-curable resins and electron beam-curable resins.

The thickness of' the color printing layer is not particularly limited, and because it may vary appropriately depending on the print color density, the thickness may be selected according to the desired print color density.

The thermoreversible recording medium may have a non-reversible recording layer in combination.. The developed color tone of each recording layer may be identical or different. Furthermore, coloring layers on which arbitrary pictures are formed by printing such as offset printing and gravure printing or by inkjet printers, thermoelectric printers and dye sublimation printers on part or entire surface of the same side or part of the opposite side of the recording layer in the thermoreversible Recording medium. Furthermore, an OP varnish layer, which contains a curable resin as a main component, may be disposed on part or entire surface of the coloring layer. Examples of pictures include characters, patterns, drawing patterns, photographs and information detectable by infrared rays. Moreover, any of the constituent layers may be colored by simply adding thereto dye or pigment.

Furthermore, holograms may be provided in the thermoreversible recording medium for security purposes And designs such as figures, company symbols and symbol marks, etc.. may be disposed by forming convexes and concaves in a relief form or intaglio form for provision of industrial design.

The thermoreversible recording medium can be formed into desired form accordingly and may be formed into card form, tag form, label form, sheet form and roll form, for example. The thermoreversible recording medium formed into card form can be applied to prepaid cards and point cards, etc. and can be further applied to credit cards.

In addition, the thermoreversible recording medium in tag form, which is smaller than card form, can be applied to price tags, etc. and the thermoreversible recording medium in tag form, which is larger than card form, may be applied to process management, shipping instruction and ticket, etc. The thermoreversible recording medium in label form may be processed to have various sizes and used for process management or material management, etc.. by sticking to trucks, containers, boxes and bulk containers, etc. which are used repeatedly Moreover, because the thermoreversible recording medium of sheet size, which is larger than card size, allows wider print range, it is usable for general documents or instructions for process management

### -Example of Combination of Thermoreversible Recording Medium With Thermoreversible Recording Member RF-ID-

A thermoreversible recording member used in the present invention includes the reversible thermosensitive recording layer (recording layer) and an information storage unit which are disposed (integrated) to the same card or tag. Information can be checked by just looking at the card or tag without using a special instrument, thus providing excellent convenience. When the content of the information storage unit has been overwritten, the item displayed on a thermoreversible recording portion is overwritten correspondingly. In this way the thermoreversible recording medium can be used repeatedly.

The information storage unit is not particularly limited and may be selected accordingly, and preferred examples include magnetic recording layers, magnetic stripes, IC memories, optical memories, and RF-ID tags. When the information storage unit is used for process management and material management, a RF-ID tag is particularly suitable for use. Incidentally, the RF-ID tag is composed of a IC chip and an antenna connected to the IC chip.

The thermoreversible recording member has the reversibly displayable recording layer and information storage unit, and a preferred example of the information storage unit is a RF-ID tag.

FIG. 15 shows a schematic diagram of a RF-ID tag 85. The RF-ID tag 85 is composed of an IC chip 81 and an antenna 82 connected to the IC chip 81. The IC chip 81 is divided into 4 sections: a storage unit, a power adjusting unit, a transmission unit, and a receiving unit, each of which bears a part of operation for communication The antennas of RF-ID tag 85 and reader/writer exchange data by radiowave. Specifically, there are two types of communication: an electromagnetic guidance system in which the antenna of RF-ID 85 receives a radiowave from the reader/writer whereby an electromotive force is generated by electromagnetic guidance through resonant effect; and a radiowave system which is activated by radiated electromagnetic field.. In either system, the IC chip 81 in the RF-ID tag 85 is activated by electromagnetic field from outside, information in the chip is converted into a signal which is then transmitted from the RF-ID tag 85. The information is received by the antenna of the reader/writer, recognized by a data processing device, and processed by software.

The RF-ID tag is formed into label form or card form and the RF-ID tag can be placed to the thermoreversible recording medium. The RF-ID tag can be placed on the surface of the recording layer or the back layer and it is preferably placed on the surface of the back layer. A known adhesive or sticking agent may be used for bonding together the RF-ID tag and the thermoreversible recording medium. Moreover, the thermoreversible recording medium and the RF-ID tag may be integrated together by lamination, etc. to be formed into card form or tag form

An example of how the thermoreversible recording medium is combined with the RF-ID tag in the process management will be described.. A process line on which containers containing delivered raw materials are conveyed is equipped with a unit by which a visible image is written on the display portion of a container being conveyed, without involving contact, and a unit by which a visible image is erased without involving contact. In addition, the process line is equipped with a reader/writer for performing non-contact reading and overwriting of information by reading the information in the attached RF-ID of the container by transmission of electromagnetic waves. Furthermore, the process line is also equipped with a control unit for performing sorting, weighing and management of containers on the distribution line on the basis of the individual information of the containers being conveyed, which the information is written or read out on or from the container without involving contact with the reader/writer.

Product inspection is performed by recording such information as product name and quantity in the RF-ID tag-equipped thermoreversible recording medium attached to the container. In the next step, instruction is given to process the delivered raw material, information for processing is recorded on the thermoreversible recording medium and the RF-ID tag, thereby creating a processing instruction and the materials proceed to the processing step according to the instruction. Next, order information is recorded on the thermoreversible recording medium and RF-ID tag as an order instruction for the processed product, shipping information is read from collected containers after product shipment and containers and the thermoreversible recording medium with the RF-ID tag are used again for delivery, At this time, erasing /printing of information can be performed without peeling the thermoreversible recording medium off from the containers, etc. because this is laser-based non-contact recording on thermoreversible recording media. Furthermore, process can be managed in real time and information stored in the RF-ID tag can be displayed on the thermoreversible recording medium simultaneously, because the RF-ID can also store information without involving contact..

According to the present invention, it is possible to solve the foregoing conventional problems and to provide an image processing method, wherein laser beams are sequentially applied in alternating directions while involving discontinuous laser application for image erasing and image formation, and wherein turn back areas and/or overlapped portions of laser beam lines in the laser scanning direction are not irradiated with laser beams, to thereby avoid accumulation of excessive heat, whereby cycle durability and erasability are increased and image-erasing time is shortened.

### EXAMPLES

The present invention will be described with reference to Examples, which however shall not be construed as limiting the scope of the present invention.

### (Preparation Example 1)

### <Preparation of Thermoreversible Recording Medium>

A thermoreversible recording medium that offers temperature-dependent reversible changes in color tone (between clear state and color-developed state) was prepared as follow

### -Support-

A milky polyester film (Tetron Film U2L98W by Teijin Dupont Films Japan Ltd.) of 125µm thickness was used as a support.

### -Under Layer-

A coating solution for under layer was prepared by mixing together 30 parts by mass of styrene butadiene copolymer (PA-9159 by Nippon A&L Inc.), 12 parts by mass of polyvinyl alcohol resin (Poval PVA103 by Kuraray Co., Ltd.), 20 parts by mass of hollow particles (Microsphere R-300 by Matsumoto Yushi-Seiyaku Co.., Ltd.) and 40 parts by mass of water, followed by 1 hour stirring until homogenous.

Next, the support was coated with the obtained coating solution for under layer by means of a wire bar, heated at 80°C for 2 minutes and dried to form an under layer of 20µm thickness.

### -Reversible Thermosensitive Recording Layer (Recording Layer)-

Five parts by mass of the reversible developer represented by the following Structural Formula (1), 0.5 parts by mass each of two different decolorization accelerations respectively represented by the following Structural Formulas (2) and (3), 10 parts by mass of' 50% by mass solution of acrylpolyol (hydroxyl value: 200) and 80 parts by mass of methyl ethyl ketone were mixed and dispersed using a ball mill until the average particle diameter was approximately equal to 1µm.

### (Reversible Developer)

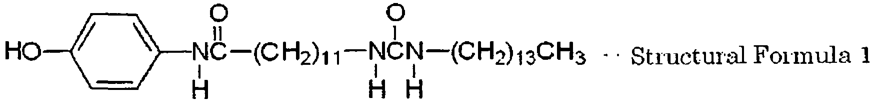

### (Decolorization Accelerator)

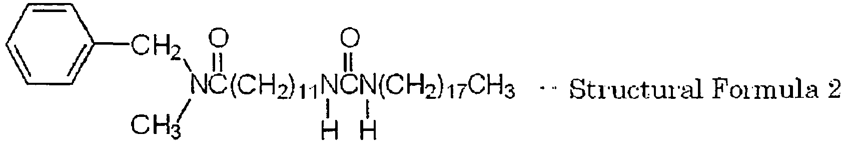

C₁₇H₃₅CONHC₁₈H₃₅ Structural Formula 3

Next, 1 part by mass of 2-anilino-3-methyl-6dibutylaminofluoran as a leuco dye, 0.2 parts by mass of phenol antioxidant (IRGANOX565 by Ciba Specialty Chemicals K.K.) represented by the following Structural Formula (4), and 5 parts by mass of isocyanate (Colonate HL by Nippon Plyurethane Industry Co., Ltd.) were added to the dispersion solution in which the reversible developer had been dispersed, and stirred thoroughly to prepare a coating solution for recording layer.

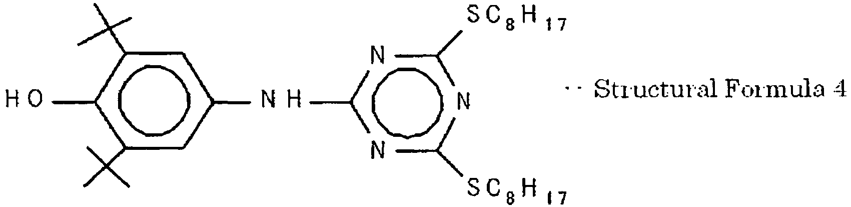

Next, the support on which the under layer had already been formed was coated with the obtained coating solution for recording layer by means of a wire bar, and the coating solution was dried at 100°C for 2 minutes followed by curing at 60°C for 24 hours to form a recording layer of approximately 11µm thickness..

### -intermediate Layer-

Three parts by mass of 50% by mass solution of acrylpolyol resin (LR327 by Mitsubishi Rayon Co., Ltd.), 7 parts by mass of 30% by mass dispersion solution of zinc oxide particle (ZS303 by Sumitomo Osaka Cement Co.., Ltd..), 1.5 parts by mass of isocyanate (Colonate HL by Nippon Polyurethane Industry Co., Ltd.) and 7 parts by mass of methyl ethyl ketone were mixed together and stirred thoroughly to prepare a coating solution for intermediate layer.

Next, the support, on which the under layer and the recording layer had already been formed, was coated with the coating solution for intermediate layer by means of a wire bar, heated at 90°C for 1 minute, dried and again heated at 60°C for 2 hours to form an intermediate layer of approximately 2µm thickness..

### -Protective Layer-

Three parts by mass of pentaerythritolhexaacrylate (KAYARAD DPHA by Nippon Kayaku Co.., Ltd.), 3 parts by mass of urethanacrylateoligomer (Art Resin UN-3320HA by Negami Chemical Industrial Co.., Ltd.), 3 parts by mass of acrylic acid ester of pentaerythritolcaprolactone (KAYARAD DPCA-120 by Nippon Kayaku Co., Ltd.), 1 part by mass of silica (P526 by Mizusawa Industrial Chemical, Ltd), 0.5 parts by mass of photopolymerization initiator (Irgacure® 184 by Nihon Ciba-Geigy K.K.) and 11 parts by mass of isopropyl alcohol were mixed together and stirred thoroughly by means of ball mill until the average particle diameter became approximately 3µm In this way a coating solution for protective layer was prepared.

Next, the support, on which the under layer, the recording layer and the intermediate layer had already been formed, was coated with the coating solution for protective layer by means of a wire bar, heated at 90°C for 1 minute, dried and cross-liked by means of an ultraviolet lamp of 80W/cm to form a protective layer of approximately 4µm thickness.

### -Back Layer-

7.5 parts by mass of pentaerythritolhexaacrylate (KAYARAD DPHA by Nippon Kayaku Co., Ltd.), 2.5 parts by mass of urethaneacrylateoligomer (Art Resin UN-3320HA by Negami Chemical Industrial Co., Ltd.), 2.5 parts by mass of needle-shaped conductive titanium oxide (FT-3000 by Ishihara Sangyo Kaisha, Ltd., long axis=5.15µm, short axis=0.27µm, composition: titanium oxide coated with antimony-doped tin oxide), 0.5 parts by mass of photopolymerization initiator (Irgacure 184 by Nippon Ciba-Geigy K.K.) and 13 parts by mass of' isopropyl alcohol were mixed together and stirred thoroughly by means of ball mill to prepare a coating solution for back layer..

Next, a surface of the support, the other side of which the recording layer, the intermediate layer and the protective layer had already been formed, was coated with the coating solution for back layer by means of a wire bar, heated at 90°C for 1 minute, dried and cross-linked by means of an ultraviolet lamp of 80W/cm to form a back layer of approximately 4µm thickness. In this way a thermoreversible recording medium of Preparation Example 1 was prepared.

### (Preparation Example 2)

### <Preparation of Thermoreversible Recording Medium>

A thermoreversible recording medium that offers temperature-dependent reversible changes in transparency (between clear state and clouded state) was prepared as follow.

### -Support-

A transparent PET film (Lumilar 175-T12 by Toray Industries, Inc.) of 175µm thickness was used as a support.

### -Reversible Thermosensitive Recording Layer (Recording Layer)-

In a glass bottle, 3 parts by mass of low-molecular-weight organic substance represented by the following Structural Formula (5) and 7 parts by mass of docosyl benenate were added in a resin solution containing 26 parts by mass of vinyl chloride copolymer (M110 by Zeon Corp.) dissolved in 210 parts by mass of methyl ethyl ketone. Ceramic beads of 2mm diameter were placed in the glass bottle, followed by dispersing treatment for 48 hours by using a paint shaker (by Asada Iron Works, Co.., Ltd.) In this way a uniform dispersion solution was obtained.

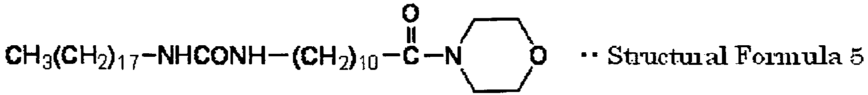

Next, 4 parts by mass of' isocyanate compound (Colonate 2298-90T by Nippon Polyurethane Industry Co., Ltd.) was added to the obtained dispersion solution to prepare a solution for thermosensitive recording layer.

The support (an adhesion layer of PET film having a magnetic recording layer) was then coated with the obtained solution for thermosensitive recording layer, heated and dried. Thereafter, the support was allowed to stand for 24 hours at 65°C for cross-linking of resin, whereby a thermosensitive recording layer of approximately 10µm thickness was formed.

### -Protective Layer-

The thermosensitive recording layer was coated with a solution which consists of 10 parts by mass of 75% butyl acetate solution of urethane acrylate ultraviolet-curable resin (Unidic C7-157 by Dainippon Ink and Chemicals, Inc..) and 10 parts by mass of isopropyl alcohol by means of a wire bar, heated, dried and then hardened by irradiating an ultraviolet light by means of a high pressure mercury lamp of 80W/cm to form a protective layer of approximately 3µm thickness. In this way a thermoreversible recording medium of Preparation Example 2 was prepared.

### (Preparation Example 3)

### <Preparation of Thermoreversible Recording Medium>

A thermoreversible recording medium of Preparation Example 3 was prepared as in Preparation Example 1 except that 0.03 parts by mass of photothermal conversion material (Excolor®IR-14 by Nippon Shokubai Co.., Ltd.) was added in the recording layer upon fabrication of the thermoreversible recording medium.

### (Example 1)

Using a laser marker equipped with a CO₂ laser of 40W output power (LP-440 by Sunx Ltd.), a single laser beam was swept over the thermoreversible recording medium of Preparation Example 1 under the following laser condition: output power = 7W, radiation distance = 185mm, spot diameter = about 0.2mm, and scan speed = 2,000mm/s), forming a character image thereon that is formed of a single laser beam line Next, the laser output was changed to 32W, radiation distance to 224mm, spot diameter to about 3mm and scan speed to 2,400mm/s. Thereafter, as shown in FIG.. 3, 114 laser beams were swept over an area of 110mm by 70mm linearly in the same direction at 0.6mm intervals between them.. It succeeded in erasing the image completely, and it took 6.3 seconds to eliminate the image.

This sequence of image recording and image erasing was repeated 300 times; it succeeded in recording and erasing images without failure.

### (Example 2)

Using the laser marker of Example 1, a single laser beam was swept over the thermoreversible recording medium of Preparation Example 1 to record thereon a character image as in Example 1 that is formed of a single laser beam line. Subsequently, the laser output was set to 32W, radiation distance to 224mm, spot diameter to about 3mm, scan speed to 2,400mm/s and pre-scan time (mirror scanning time) to 1 millisecond, and as shown in FIG. 4, 114 laser beams were swept over an area of 110mm by 70mm linearly in the same direction at 0.6mm intervals between them.. As a result, it succeeded in erasing the image completely, and it took 6..6 seconds to eliminate the image..

This sequence of image recording and image erasing was repeated 300 times; it succeeded in recording and erasing images without failure.

### (Example 3)

Using the laser marker of Example 1, a single laser beam was swept over the thermoreversible recording medium of Preparation

Example 1 to record thereon a character image as in Example 1 that is formed of a single laser beam line.. Subsequently, the laser output was set to 32W, radiation distance to 224mm, spot diameter to about 3mm, scan speed to 2,400mm/s and pre-scan time to 3 milliseconds, and as shown in FIG. 5, 114 laser beams were swept over an area of 110mm by 70mm linearly in alternating directions at 0.6mm intervals between them. As a result, it succeeded in erasing the image completely, and it took 5.9 seconds to eliminate the image..

This sequence of image recording and image erasing was repeated 300 times; it succeeded in recording and erasing images without failure.

### (Example 4)

Using the laser marker of Example 1, a single laser beam was swept over the thermoreversible recording medium of Preparation Example 1 to record thereon a character image as in Example 1 formed of a single laser beam line.. Subsequently, the laser output was set to 32W, radiation distance to 224mm, spot diameter to about 3mm and scan speed to 2,300mm/s, and as shown in FIG. 6, 114 laser beams were swept over an area of 110mm by 70mm in the sequence shown in FIG. 4 so that the interval between adjacent beams is 0.6mm. As a result, it succeeded in erasing the image completely, and it took 5.5 seconds to eliminate the image.

This sequence of image recording and image erasing was repeated 300 times; it succeeded in Recording and erasing images without failure.

### (Example 5)

Using the laser marker of Example 1, a single laser beam was swept over the thermoreversible recording medium of Preparation Example 1 to record thereon a character image as in Example 1 formed of a single laser beam line Subsequently, the laser output was set to 32W, radiation distance to 224mm, spot diameter to about 3mm and scan speed to 2,400mm/s and pre-scan time (mirror scanning time) to 2 milliseconds, and as shown in FIG. 7, 114 laser beams were swept over an area of 110mm by 70mm in the sequence shown in FIG. 5 at 0.6mm intervals between them. As a results, it succeeded in erasing the image completely, and it took 5.7 seconds to eliminate the image.

This sequence of image Recording and image erasing was repeated 300 times; it succeeded in recording and erasing images without failure.

### (Example 6)

After setting the laser output to 7W, radiation distance to 185mm, spot diameter to about 0.2mm and scan speed to 2,000mm/s in the laser marker of Example 1, 50 laser beams were swept over the thermoreversible recording medium of Preparation Example 1 linearly in the same direction at 0.16mm intervals between them as shown in FIG. 3, recording thereon a solid image of 8mm by 8mm. Subsequently, image erasing was performed under the condition of Example 4.. As a result, it succeeded in erasing the solid image completely, and it took 5.5 seconds to eliminate the image.

This sequence of image recording and image erasing was repeated 100 times; it succeeded in recording and erasing images without failure.

### (Example 7)

After setting the laser output to 7W, radiation distance to 185mm, spot diameter to about 0.2mm, scan speed to 2,000mm/s and pre-scan time to 0.5 milliseconds in the laser marker of Example 1, 50 laser beams were swept over the thermoreversible recording medium of Preparation Example 1 linearly in the same direction at 0.16mm intervals between them as shown in FIG. 4, recording thereon a solid image of 8mm by 8mm. Subsequently, image erasing was performed under the condition of Example 4. As a result, it succeeded in erasing the solid image completely, and it took 5.5 seconds to eliminate the image.

This sequence of image recording and image erasing was repeated 300 times; it succeeded in recording and erasing images without failure.

### (Example 8)

After setting the laser output to 7W, radiation distance to 185mm, spot diameter to about 0.2mm, scan speed to 2,000mm/s and pre-scan time to 0.5 milliseconds in the laser marker of Example 1, 50 laser beams were swept over the thermoreversible recording medium of Preparation Example 1 linearly in alternating directions at 0.16mm intervals between them as shown in FIG. 5, recording thereon a solid image of 8mm by 8mm. Subsequently, image erasing was performed under the condition of Example 4. As a result, it succeeded in erasing the solid image completely, and it took 5.5 seconds to eliminate the image.

This sequence of image recording and image erasing was repeated; it succeeded in recording and erasing images without failure up to 50 cycles.

### (Example 9)

After setting the laser output to 7W, radiation distance to 185mm, spot diameter to about 0.2mm and scan speed to 2,000mm/s in the laser marker of Example 1, 50 laser beams were swept over the thermoreversible recording medium of Preparation Example 1 linearly in the sequence shown in FIG. 6 at 0.16mm intervals between them, recording thereon a solid image of 8mm by 8mm Subsequently, image erasing was performed under the condition of Example 4.. As a result, it succeeded in erasing the solid image completely, and it took 5..5 seconds to eliminate the image.

This sequence of image recording and image erasing was repeated 100 times; it succeeded in recording and erasing images without failure

### (Example 10)

After setting the laser output to 7W, radiation distance to 185mm, spot diameter to about 0.2mm, scan speed to 2,000mm/s and pre-scan time to 0.5 milliseconds in the laser marker of Example 1, 50 laser beams were swept over the thermoreversible recording medium of Preparation Example 1 linearly in the sequence shown in FIG. 7 at 0.16mm intervals between them, Recording thereon a solid image of 8mm by 8mm. Subsequently, image erasing was performed under the condition of Example 4. As a result, it succeeded in erasing the solid image completely, and it took 5.5 seconds to eliminate the image.

This sequence of image recording and image erasing was repeated 300 times; it succeeded in recording and erasing images without failure

### (Example 11)

Using the laser marker of Example 1, a single laser beam was swept over the thermoreversible recording medium of Preparation

Example 1 to reword thereon a character image as in Example 1 that is formed of a single laser beam line.. Subsequently, the laser output was set to 32W, radiation distance to 224mm, spot diameter to about 3mm and scan speed to 2,300mm/s, and 114 laser beams were swept over an area of 110mm by 70mm in the sequence shown in FIG. 8 at 0.6mm intervals between them. As a result, it succeeded in erasing the image completely, and it took 6.3 seconds to eliminate the image..

This sequence of image recording and image erasing was repeated 300 times; it succeeded in recording and erasing images without failure.

### (Example 12)

Using the laser marker of Example 1, a single laser beam was swept over the thermoreversible recording medium of Preparation Example 1 to record thereon a character image as in Example 1 that is formed of a single laser beam line. Subsequently, the laser output was set to 32W, radiation distance to 224mm, spot diameter to about 3mm, scan speed to 2,400mm/s and pre-scan time to 1 millisecond, and 114 laser beams were swept over an area of 110mm by 70mm in the sequence shown in FIG.. 9 at 0.6mm intervals between them. As a result, it succeeded in erasing the image completely, and it took 6.6 seconds to eliminate the image.

This sequence of image recording and image erasing was repeated 300 times; it succeeded in recording and erasing images without failure.

### (Example 13)

After setting the laser output to 7W, radiation distance to 185mm, spot diameter to about 0.2mm and scan speed to 2,000mm/s in the laser marker, of Example 1, 50 laser beams were swept over the thermoreversible recording medium of Preparation Example 1 in the sequence shown in FIG. 8 at 0.16mm intervals between them, recording thereon a solid image of 8mm by 8mm.. Subsequently, image erasing was performed under the condition of Example 4.. As a result, it succeeded in erasing the solid image completely, and it took 5.5 seconds to eliminate the image.

This sequence of image recording and image erasing was repeated 200 times; it succeeded in recording and erasing images without failure.

### (Example 14)

After setting the laser output to 7W, radiation distance to 185mm, spot diameter to about 0.2mm and scan speed to 2,000mm/s in the laser marker of Example 1, 50 laser beams were swept over the thermoreversible recording medium of Reparation Example 1 in the sequence shown in FIG. 9 at 0.16mm intervals between them, recording thereon a solid image of 8mm by 8mm. Subsequently, image erasing was performed under the condition of Example 4. As a result, it succeeded in erasing the solid image completely, and it took 5.5 seconds to eliminate the image.

This sequence of image Recording and image erasing was repeated 300 times; it succeeded in recording and erasing images without failure

### (Comparative Example 1)

Using the laser marker of Example 1, a single laser beam was swept over the thermoreversible recording medium of Preparation

Example 1 to record thereon a character image as in Example 1 that is formed of a single laser beam line.. Subsequently, the laser output was set to 11W, radiation distance to 224mm, spot diameter to about 3mm and scan speed to 800mm/s, and as shown in FIG. 2, 114 laser beams were swept over an area of 110mm by 70mm linearly in alternating directions at 0.6mm intervals between them. As a result, it succeeded in erasing the image completely..

This sequence of image recording and image erasing was repeated under the condition described above, and complete image recording and image erasing were possible up to 50 cycles, but it took 15.5 seconds to eliminate the image at that point.

### (Comparative Example 2)

Using the laser marker of Example 1, a single laser beam was swept over the thermoreversible recording medium of Preparation Example 1 to record thereon a character image as in Example 1. Subsequently, the laser output was set to 11W, radiation distance to 224mm, spot diameter to about 3mm and scan speed to 800mm/s, and as shown in FIG.. 1, laser beams were swept over an area of 110mm by 70mm linearly in alternating directions at 0.6mm intervals between them. As a result, it succeeded in erasing the image completely, but it took 15.7 seconds to eliminate the image..

This sequence of image recording and image erasing was repeated under the condition described above; however, after 20 cycles, it resulted in generation of a prominent image mark after image erasing, resulting in failure to continue complete image erasing.

### (Comparative Example 3)

After setting the laser output to 7W, radiation distance to 185mm, spot diameter to about 0.2mm and scan speed to 2,000mm/s in the laser marker of Example 1, 50 laser beams were swept over the thermoreversible recording medium of Preparation Example 1 linearly in alternating directions at 0.16mm intervals between them as shown in FIG.. 2, recording thereon a solid image of 8mm by 8mm. Subsequently, image erasing was performed as in Comparative Example 1 under the condition of Comparative Example 1. As a result, it succeeded in erasing the solid image completely, but it took 15..5 seconds to eliminate the image.

This sequence of image recording and image erasing was repeated under the condition described above; however, after 10 cycles, it resulted in generation of a prominent image mark after image erasing, resulting in failure to continue complete image erasing.

### (Comparative Example 4)

After setting the laser output to 7W, radiation distance to 185mm, spot diameter to about 0.2mm and scan speed to 2,000mm/s in the laser marker of Example 1, laser beams were swept over the thermoreversible recording medium of Preparation Example 1 linearly in alternating directions at 0.16mm intervals between them as shown in FIG. 1, recording thereon a solid image of 8mm by 8mm. Subsequently, image erasing was performed as in Comparative Example 2 under the condition of' Comparative Example 2. As a result, it succeeded in erasing the solid image completely, but it took 15.7 seconds to eliminate the image.

This sequence of image recording and image erasing was repeated under the condition described above; however, after 10 cycles, it resulted in generation of a prominent image mark after image erasing, resulting in failure to continue complete image erasing.

### (Comparative Example 5)

After setting the laser output to 5.5W, radiation distance to 185mm, spot diameter to about 0,2mm and scan speed to 2,000mm/s in the laser marker of Example 1, laser beams were swept over the thermoreversible recording medium of Preparation Example 2 linearly in alternating directions at 0.16mm intervals between them as shown in FIG. 1, recording thereon a solid image of 8mm by 8mm. Subsequently, the laser output was set to 8..5W, radiation distance to 224mm, spot diameter to about 3mm and scan speed to 800mm/s, and as shown in FIG. 91, laser beams were swept over an area of 110mm by 70mm linearly in alternating directions at 0.6mm intervals between them. As a result, it succeeded in erasing the solid image completely, but it took 15.5 seconds to eliminate the image.

This sequence of image recording and image erasing was repeated under the condition described above; however, after 10 cycles, it resulted in generation of a prominent image mark after image erasing, resulting in failure to continue complete image erasing.

### (Examples 15-34)

Image recording and erasing conditions of Examples 1-14 were combined as shown in Table 1, and image recording operations, image erasing operations, and cycle tests were conducted. The results are given in Table 1. The results of Comparative Examples 1-5 are given in Table 2

**Table 1**

| | Image recording condition used | Image erasing condition used | Erasing time | Cycle test |
|---|---|---|---|---|
| Ex. 1 | Ex. 1 | Ex. 1 | 6.3 sec | A |
| Ex. 2 | Ex. 1 | Ex. 2 | 6.6 sec | A |
| Ex.3 | Ex. 1 | Ex. 3 | 5.9 sec | A |
| Ex.4 | Ex. 1 | Ex. 4 | 5.5 sec | A |
| Ex. 5 | Ex. 1 | Ex. 5 | 5.7 sec | A |
| Ex. 6 | Ex. 6 | Ex. 4 | 5.5 sec | B |
| Ex. 7 | Ex. 7 | Ex. 4 | 5.5 sec | A |
| Ex. 8 | Ex. 8 | Ex. 4 | 5.5 sec | C |
| Ex. 9 | Ex. 9 | Ex. 4 | 5.5 sec | B |
| Ex. 10 | Ex. 10 | Ex. 4 | 5.5 sec | A |
| Ex. 11 | Ex. 1 | Ex. 11 | 6.3 sec | A |
| Ex. 12 | Ex. 1 | Ex. 12 | 6.6 sec | A |
| Ex. 13 | Ex. 13 | Ex. 4 | 5.5 sec | B |
| Ex. 14 | Ex. 14 | Ex. 4 | 5.5 sec | A |
| Ex. 15 | Ex. 6 | Ex. 1 | 6.3 sec | B |
| Ex. 16 | Ex. 6 | Ex. 2 | 6.6 sec | B |
| Ex. 17 | Ex. 6 | Ex. 3 | 5.9 sec | B |
| Ex. 18 | Ex. 6 | Ex. 5 | 5.7 sec | B |
| Ex. 19 | Ex. 7 | Ex. 1 | 6.3 sec | A |
| Ex. 20 | Ex. 7 | Ex. 2 | 6.6 sec | A |
| Ex. 21 | Ex. 7 | Ex. 3 | 5.9 sec | A |
| Ex. 22 | Ex. 7 | Ex. 5 | 5.7 sec | A |
| Ex. 23 | Ex. 8 | Ex. 1 | 6.3 sec | C |
| Ex. 24 | Ex. 8 | Ex. 2 | 6.6 sec | C |
| Ex. 25 | Ex. 8 | Ex. 3 | 5.9 sec | C |
| Ex. 26 | Ex.8 | Ex. 5 | 5.7 sec | C |
| Ex. 27 | Ex.9 | Ex. 1 | 6.3 sec | B |
| Ex. 28 | Ex. 9 | Ex. 2 | 6.6 sec | B |
| Ex. 29 | Ex. 9 | Ex. 3 | 5.9 sec | B |
| Ex. 30 | Ex. 9 | Ex. 5 | 5.7 sec | B |
| Ex. 31 | Ex. 10 | Ex. 1 | 6.3 sec | A |
| Ex. 32 | Ex. 10 | Ex. 2 | 6.6 sec | A |
| Ex. 33 | Ex. 10 | Ex. 3 | 5.9 sec | A |
| Ex. 34 | Ex. 10 | Ex. 5 | 5.7 sec | A |

**Table 2**

| | Image recording condition used | Image erasing condition used | Erasing time | Cycle test |
|---|---|---|---|---|
| Compara Ex. 1 | Ex 1 | Compara Ex. 1 | 15.5 sec | C |
| Compara Ex. 2 | Ex 1 | Compara. Ex. 2 | 15.7 sec | D |
| Compara Ex. 3 | Compara Ex. 3 | Compara. Ex. 1 | 15 5 sec | D |
| Compara. Ex. 4 | Compara Ex. 4 | Compara Ex 2 | 15.7 sec | D |
| Compara Ex. 5 | Compara Ex 5 | Compara Ex 5 | 15 5 sec | D |

### <Evaluation Criteria in Cycle Test>

A: Complete image recording/erasing is possible even after 300 cycles of image recording/erasing.

B: Complete image recording/erasing is possible after 100-299 cycles of image recording/erasing

C: Complete image recording/erasing is possible after 40-99 cycles of image recording/erasing.

D: Complete image recording/erasing is difficult to achieve after 39 cycles of image recording/erasing or less.

It can be learned from the results given in Tables 1 and 2 that it succeeded in achieving short-time image erasing and relatively excellent cycle durability in Examples 1-34, and that it succeeded in achieving short-time image erasing and significantly excellent cycle durability particularly with combinations of image recording conditions and image erasing conditions adopted in Examples 7, 9, 10, 22, and 34.

### (Example 35)

After setting the laser output to 5.5W, radiation distance to 185mm, spot diameter to about 0.2mm and scan speed to 2,000mm/s in the laser marker of Example 1, 50 laser beams were swept over the thermoreversible recording medium of Preparation Example 2 linearly in the same direction at 0.16mm intervals between them as shown in FIG.. 3, recording thereon a solid image of 8mm by 8mm.. Subsequently, the laser output was set to 19W, radiation distance to 224mm, spot diameter to about 3mm and scan speed to 2400mm/s, and as shown in FIG. 3, 114 laser beams were swept over an area of 110mm by 70mm linearly in the same direction at 0.6mm intervals between them. As a result, it succeeded in erasing the solid image completely, and it took 6.3 seconds to eliminate the image.

This sequence of image recording and image erasing was repeated 100 times under the condition described above; it succeeded in recording and erasing images without failure..

### (Example 36)

Using the laser marker of Example 1, a solid image was recorded on the thermoreversible recording medium of Preparation Example 1 as in Example 9. Subsequently, the laser output was set to 11W, radiation distance to 224mm, spot diameter to about 3mm and scan speed to 800mm/s, and as shown in FIG. 2, 114 laser beams were swept over an area of 110mm by 70mm linearly in alternating directions at 0.6mm intervals between them. As a result, it succeeded in erasing the image completely, but it took 15.5 seconds to eliminate the image.

This sequence of image recording and image erasing was repeated; it succeeded in recording and erasing images without failure up to 50 cycles.

### (Example 37)

As a laser marker, LPP-400 (by Sunx Ltd..) equipped with a CO₂ laser source with an output power of 40W was prepared, wherein a mask is placed in the optical path of a laser beam so as to cut through the center of the laser beam orthogonally The laser source was so configured that in the light intensity distribution of the laser beam in the beam cross section, the light intensity of the central region is half the intensity of the peripheral regions. Subsequently, after setting the laser output to 12W, radiation distance to 224mm, spot diameter to about 0.2mm and scan speed to 1,000mm/s, 50 laser beams were swept over the thermoreversible recording medium of Preparation Example 1 linearly in the same direction at 0.16mm intervals between them as shown in FIG. 3, recording thereon a solid image of 8mm by 8mm. After setting the laser output to 12W, radiation distance to 224mm, sport diameter to about 3mm and scan speed to 1,000mm/s, 154 laser beams were swept over an area of 110mm by 70mm of the thermoreversible recording medium linearly in the same direction at 0.45mm intervals between them as shown in FIG. 3. As a results, it succeeded in erasing the image completely..

This sequence of image recording and image erasing was repeated 300 times under the condition described above; it succeeded in recording and erasing images without failure.

### (Example 38)

As a laser, a fiber-coupled, high-output semiconductor laser device (NBT-S140mkII by Jenoptik Laserdiode, central wavelength: 808nm, optical fiber core diameter: 600µm, NA: 0.22) with a laser output of 140W, equipped with a focusing optical system f100, was prepare The laser output was set to 12W, radiation distance to 91..4mm and spot to about 0.6mm. At a XY stage feed rate of 1,200mm/s, 16 laser beams were swept over the thermoreversible recording medium of Preparation Example 3 in the sequence shown in FIG. 6 at 0.5mm intervals between them, thereby forming a uniform solid image of 8mm by 8mm.

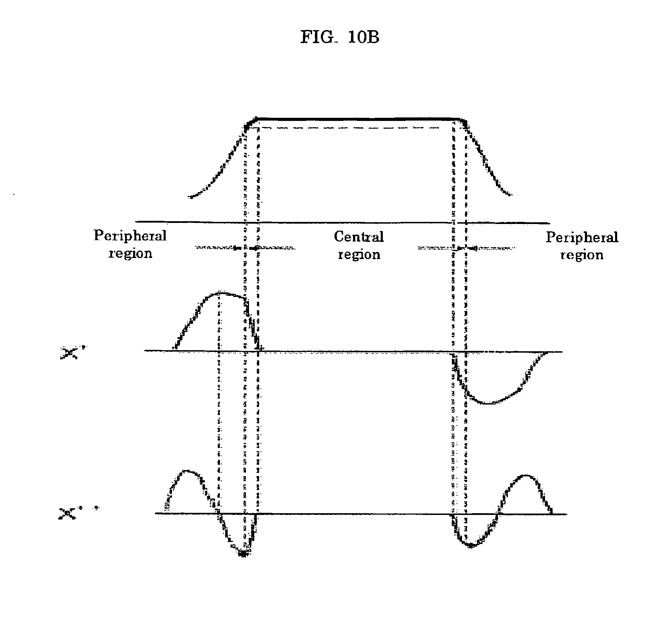

The light intensity distribution of the laser beam in its cross section cut along a direction substantially orthogonal to the beam travel direction was measured with a laser beam profiler, Beam On (by Duma Optronics Ltd.), and a light intensity distribution curve shown in FIG.. 17 was obtained. Moreover, differentiation curves, obtained by differentiating the light intensity distribution curve once (X') and twice (X"), are shown in FIG. 10B. It was established from the graphs in FIG. 10B that the light intensity of the central region was 1.05 times that of the peripheral region..

Subsequently, the image created on the thermoreversible recording medium was erased by sweeping 114 laser beams over an 110mm x 70mm area of the thermoreversible recording medium in the sequence shown in FIG. 6 at a XY stage feed rate of 1,200mm/s by using the laser devise described above, wherein the laser output, radiation distance and spot diameter were set to 15W, 86mm and 3.0mm, respectively,

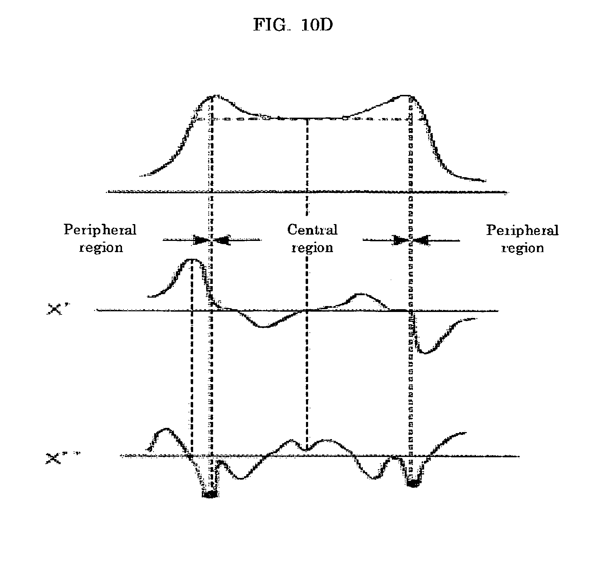

At this point, the light intensity distribution of the laser beam in its cross section cut along a direction substantially orthogonal to the beam travel direction was measured similarly with the laser beam profiler, BeamOn (by Duma Optronics Ltd.), and a light intensity distribution curve as shown in FIG 18 was obtained. Moreover, differentiation curves, obtained by differentiating the light intensity distribution curve once (X') and twice (X"), are shown in FIG.. 10D. It was established from the graphs in FIG. 10D that the light intensity of the central region was 0.6 times that of the peripheral region.

This sequence of image recording and image erasing was repeated 100 times under the condition described above; it succeeded in recording and erasing images without failure.

### (Example 39)

Using the laser marker of Example 1, a solid image was recorded on the thermoreversible recording medium of Preparation Example 1 as in Example 9. Subsequently, the medium was heated at 140°C for 1 second using a heat gradient tester (TYPE HG-100, by TOYO SEIKI CO., LTD) with a pressure of 1kgf/cm² In this way the solid image was erased.

This sequence of image recording and image erasing was repeated 100 times under the condition described above; it succeeded in recording and erasing images without failure.

### (Example 40)

After setting the laser output to 7W, radiation distance to 185mm, spot diameter to about 0.2mm and scan speed to 2,000mm/s in the laser marker of Example 1, 50 laser beams were swept over the thermoreversible recording medium of Preparation Example 1 in the sequence shown in FIG. 19 at 0.16mm intervals between them, recording thereon a solid image of 8mm by 8mm. Subsequently, the laser output was set to 32W, radiation distance to 224mm, spot diameter to about 3mm and scan speed to 2400mm/s, and as shown in FIG. 19, 114 laser beams were swept over an area of 110mm by 70mm linearly in the same direction at 0.6mm intervals between them. As a result, it succeeded in erasing the solid image completely, and it took 6.3 seconds to eliminate the image

This sequence of image recording and image erasing was repeated 100 times under the condition described above; it succeeded in recording and erasing images without failure.

### (Example 41)

### <Example of Use as Label>

On the support used in the <<Preparation of Thermoreversible Recording Medium> section of Preparation Example 1, the under layer of Preparation Example 1 and the recording layer were sequentially disposed.

Subsequently, a coating solution for layer that contains polymer with a UV-absorbing structure, prepared in the following manner, was applied over the under layer and recording layer-coated support by means of a wire bar, dried at 90°C for 1 minute, and heated at 50°C for 24 hours to form a 2mm thick layer containing polymer with a UV-absorbing structure, or an intermediate layer.

### -Preparation of Coating Solution for Layer Containing Polymer with UV-Absorbing Structure (Intermediate Layer)-

A composition consisting of 20 parts by mass of 40% by mass solution of UV-absorbable polymer (PUVA-60MK 40K by Otsuka Chemical Co., Ltd., hydroxyl value: 60), 3.2 parts by mass of xylenediisocyanate (D-110N by Mitsui Chemicals Polyurethanes. Inc.) and 23 parts by mass of methyl ethyl ketone (MEK) was thoroughly stirred with a ball mill to prepare a coating solution for layer containing polymer with a UV-absorbing structure.

Next, the coating solution protective layer, used in <Preparation of Thermoreversible Recording Medium> section, was applied over the intermediate layer of Preparation Example 1 to form a protective layer of 4µm thickness.

A coating solution for sticking layer, prepared in the manner described below, was applied over a surface of the support by means of a wire bar, the surface where the foregoing under layer, recording layer, intermediate layer and protective layer not being provided, followed by drying at 90°C for 2 minutes to form a sticking layer of' approximately 20µm thickness. In this way a thermoreversible recording label was fabricated.
-Preparation of Coating Solution for Sticking Layer-

A composition consisting of 50 parts by mass of' acrylic sticking agent (BPS-1109 by Toyo Ink MFG. Co., Ltd.) and 2 parts by mass of isocyanate (D-170N by Mitsui Chemicals Polyurethanes Inc.) was stirred thoroughly to prepare a coating solution for sticking layer.

The thermoreversible Recording label prepared above was cut into a 120mm x 80mm piece, bonding it to a plastic box. An image was then recorded on and erased from the label in a manner similar to those described in Examples 1-14. It succeeded in complete image recording and erasing.

### (Example 42)

### <Example of Use as Tag or Sign>

On the support used in used in <Preparation of Thermoreversible Recording Medium> section of Preparation Example 1, the recording layer, intermediate layer and protective layer, prepared in Preparation Example1, were sequentially applied to produce a top surface sheet. Moreover, on the support used in <Preparation of Thermoreversible Recording Medium> section of Preparation Example 1, only the back layer prepared in Preparation Example 1 was applied, producing a bottom surface sheet Each sheet was cut into a 210mm x 85mm piece, and a RF-ID inlet (by DSM Nutritional Product) and a PETG sheet (by Mitsubishi Plastics, Inc.) as a spacer surrounding the inlet were interposed between them Thereafter, the sheets were bonded together with an adhesive tape (by Nitto Denko Corporation), In this way a RF-ID-contained thermoreversible recording tag of 500µm thickness was fabricated.

The RF-ID-contained thermoreversible recording tag thus fabricated was attached to a box, and image recording and image erasing were performed as in Examples 1-14. It succeeded in complete image recording and erasing.

Preferred Examples of' the present invention have been described in detail above, The present invention, however, is not specifically restricted in scope to these Examples, and various alternations and modifications thereof can be made without departing from the scope of the present invention defined in appended claims

The image processing method of the present invention are capable of high speed, repetitive recording or erasing of a high-contrast image on or from a thermoreversible recording medium without involving any contact, as well as of preventing degradation of the thermoreversible recording medium due to repetitive use. Accordingly, the image processing method of the present invention can be used for instance for tickets, frozen meal containers, industrial products, stickers for various types of reagent containers, big monitors or displays for distribution management applications and manufacturing process management, and are particularly suitable for use in distribution/delivery systems, process management systems in factories, etc.

## Claims

1. An image processing method comprising the steps of:
recording an image on a thermoreversible recording medium (7) by heating the thermoreversible recording medium by application of a laser beam thereon, the image being formed of a plurality of laser beam lines;
and erasing an image from a thermoreversible recording medium by heating the thermoreversible recording medium by application of a laser beam, the image being formed of a plurality of laser beam lines,
wherein the thermoreversible recording medium offers temperature-dependent reversible changes in transparency or color tone, and
some part of the laser scanning involves a period where laser application is discontinued,
**characterized in that** during laser scanning where the laser beams are swept over the medium in parallel at a predetermined distance, the laser beams are sequentially applied in alternating directions while avoiding continuous laser irradiation of adjacent laser beam lines by controlling laser irradiation so that a previous laser scanning end point and the next laser scanning start point are separated, the next laser scanning start point
being a non-nearby next start point.

2. The image processing method according to claim 1, wherein the period where laser application is discontinued corresponds to a period where no laser beam is applied from a first laser scanning end point to a second laser scanning start point, the first laser scanning end point corresponding to the end point of laser scanning started at a first laser starting point, the first laser scanning end point and second laser scanning start point being spaced at a predetermined distance.

3. The image processing method according to claim 1, wherein the period where laser application is discontinued is controlled by a scan control unit of an image processing apparatus so that laser application, which has been discontinued at a first laser scanning end point, starts at a second laser scanning point, the first laser scanning end point corresponding to the end point of laser scanning started at a first laser scanning starting point.

4. The image processing method according to any one of claims 1 to 3, wherein the thermoreversible recording medium (7) comprises at least a reversible thermosensitive recording layer formed over a support, and the reversible thermosensitive recording layer contains a resin and a low-molecular-weight organic substance.

5. The image processing method according to any one of claims 1 to 3, wherein the thermoreversible recording medium (7) comprises at least a reversible thermosensitive recording layer formed over a support, and the reversible thermosensitive recording layer contains a leuco dye and a reversible developer.

6. The image processing method according to any one of claims 1 to 5, wherein in the light intensity distribution of the laser beam in its cross section cut along a direction substantially orthogonal to the beam travel direction, the intensity of the central region is equal to or less than the intensity of the peripheral regions.

## Patentansprüche

1. Bildverarbeitungsverfahren, umfassend die Schritte:
Aufzeichnen eines Bildes auf einem thermoreversiblen Aufzeichnungsmedium (7) durch Erwärmen des thermoreversiblen Aufzeichnungsmediums durch Anwendung eines Laserstrahls darauf, wobei das Bild von einer Mehrzahl von Laserstrahllinien gebildet wird;
und Löschen eines Bildes von einem thermoreversiblen Aufzeichnungsmedium durch Erwärmen des thermoreversiblen Aufzeichnungsmediums durch Abwendung eines Laserstrahls, wobei das Bild von einer Mehrzahl von Laserstrahllinien gebildet wird,
wobei das thermoreversible Aufzeichnungsmedium temperaturabhängige reversible Änderungen in Transparenz oder Farbton ermöglicht, und
ein Teil des Laserscannens eine Periode beeinhaltet, in der die Laseranwendung unterbrechen wird,
**dadurch gekennzeichnet, dass** während des Laserscannens, bei dem die Laserstrahlen parallel mit einem vorbestimmten Abstand über das Medium streichen, die Laserstrahlen sequentiell in alternierenden Dichtungen angewendet werden, während kontinuierliche Laserbestrahlung von benachbarten Laserstrahllinien durch Steuerung der Laserbestrahlung vermieden wird, so dass ein vorheriger Laserscan-Endpunkt und der nächste Laserscan-Startpunkt getrennt sind, wobei der nächste Laserscan-Startpunkt ein nicht benachbarter nächster Startpunkt ist.

2. Bildverarbeitungsverfahren nach Anspruch 1, worin die Periode, in der die Laseranwendung unterbrochen wird, einer Periode entspricht, in der kein Laserstrahl von einem ersten Laserscan-Endpunkt zu einem zweiten Laserscan-Startpunkt angewendet wird, wobei der erste Laserscan-Endpunkt dem Endpunkt des an einen ersten Laser-Startpunkt begonnenen Laserspannens entspricht, wobei der erste Laserscan-Endpunkt und der zweite Laserscan-Startpunkt mit einem vorbestimmten Abstand beabstanden sind.

3. Bildverarbeitungsverfahren nach Anspruch 1, worin die Periode, in der die Laseranwendung unterbrechen wird, durch eine Scansteuereinheit einer Bildverarbeitungsvorrichtung gesteuert wird, so dass die Laseranwendung, die an einem ersten Laserscan-Endpunkt unterbrechen werden ist, an seinem zweiten Laserscanpunkt startet, wobei der erste Laserscan-Endpunkt dem Endpunkt des Laserscannens entspricht, das an einem ersten Laserscan-Startpunkt gestartet wurde.

4. Bildverarbeitungsverfahren nach irgendeinem der Ansprüche 1 bis 3, worin das thermoreversible Aufzeichnungsmedium (7) mindestens eine über einem Träger gebildete reversible wärmeempfindliche Aufzeichnungsschicht umfasst und die reversible wärmeempfindliche Aufzeichnungsschicht ein Harz und eine niedermolekulare organische Substanz enthält.

5. Bildverarbeitungsverfahren nach irgendeinem der Ansprüche 1 bis 3, worin das thermoreversible Aufzeichnungsmedium (7) mindestens eine über einem Träger gebildete reversible wärmeempfindliche Aufzeichnungsschicht umfasst und die reversible wärmeempfindliche Aufzeichnungsschicht einen Leukofarbstoff und einen reversiblen Entwickler enthält.

6. Bildverarbeitungsverfahren nach irgendeinem der Ansprüche 1 bis 5, worin in der Lichtintensitätsverteilung des Laserstrahls im Querschnitt, geschnitten entlang einer Richtung, die im wesentlichen orthogonal zur Strahlbewegungsrichtung ist, die Intensität des zentralen Bereichs gleich der oder kleiner als die Intensität der peripheren Bereiche ist.

## Revendications

1. Procédé de traitement d'images comprenant les étapes consistant à :
enregistrer une image sur un support d'enregistrement thermoréversible (7) en chauffant le support d'enregistrement thermoréversible en appliquant un faisceau laser dessus, l'image étant formée d'une pluralité de lignes de faisceau laser ;
et effacer une image d'un support d'enregistrement thermoréversible en chauffant le support d'enregistrement thermoréversible en appliquant un faisceau laser, l'image, étant formée d'une pluralité de lignes de faisceau laser,
dans lequel le support d'enregistrement thermoréversible offre des changements réversibles de transparence ou de tonalité chromatique en fonction de la température, et
une certaine partie du balayage laser implique une période pendant laquelle l'application du laser est interrompue,
**caractérisé en ce que**, pendant le balayage laser au cours duquel les faisceaux laser sont balayés sur le support en parallèle à une distance prédéterminée, les faisceaux laser sont appliqués séquentiellement dans des directions alternées tout en évitant une irradiation laser continue des lignes de faisceau laser adjacentes en contrôlant l'irradiation laser afin qu'un point de fin de balayage laser précédent et le point de départ du balayage laser suivant soient séparés, ledit point de départ de balayage laser suivant étant un point de départ suivant éloigné.

2. Procédé de traitement d'images selon la revendication 1, dans lequel la période pendant laquelle l'application du laser est discontinue correspond à une
période pendant laquelle aucun faisceau laser n'est appliqué entre un premier point final du balayage laser et un second point de départ du balayage laser, le premier point final du balayage laser correspondant au point final du balayage laser lancé à un premier point de départ, le premier point final du balayage laser et le second point de départ du balayage laser étant espacés à une distance prédéterminée.

3. Procédé de traitement d'images selon la revendication 1, dans lequel la période pendant laquelle l'application du laser est discontinue est contrôlée par une unité de commande de balayage d'un appareil de traitement d'images afin que l'application du laser, qui a été discontinué au niveau d'un premier point final de balayage laser, commence au niveau d'un second point de balayage laser, le premier point final du balayage laser correspondant au point final du balayage laser lancé au niveau d'un premier point de départ de balayage laser.

4. Procédé de traitement d'images selon l'une quelconque des revendications 1 à 3, dans lequel le support d'enregistrement thermoréversible (7) comprend au moins une couche d'enregistrement thermosensible réversible formée sur un support, et la couche d'enregistrement thermosensible réversible contient une résine et une substance organique à faible poids moléculaire.

5. Procédé de traitement d'images selon l'lune quelconque des revendications 1 à 3, dans lequel le support d'enregistrement thermoréversible (7) comprend au moins une couche d'enregistrement thermosensible réversible formée sur un support, et la couche d'enregistrement thermosensible réversible contient un colorant leuco et un développeur réversible.

6. Procédé de traitement d'images selon l'une quelconque des revendications 1 à 5, dans lequel, en ce qui concerne la répartition de l'intensité lumineuse du faisceau laser au sein de sa découpe transversale dans une direction sensiblement orthogonale par rapport à la direction de déplacement du faisceau, l'intensité de la région centrale est égale ou inférieure à l'intensité des régions périphériques.
